# EUROPÄISCHE PATENTSCHRIFT

(11) **EP 3 830 203 B1**
(45) Veröffentlichungstag und Bekanntmachung des Hinweises auf die Patenterteilung: **13.03.2024**
(21) Anmeldenummer: 19742071.4
(22) Anmeldetag: 24.07.2019
(51) Int. Cl.: C09D 175/08, C08G 18/67, C08G 18/76, C08G 18/36, C08G 18/48, C08G 18/66

(54) **POLYURETHANZUSAMMENSETZUNG MIT LANGER VERARBEITUNGSZEIT UND HOHER FESTIGKEIT**
POLYURETHANE COMPOSITION WITH LONG PROCESSING TIME AND HIGH STRENGTH
COMPOSITION DE POLYURÉTHANE À TEMPS DE TRANSFORMATION ÉLEVÉ ET À RÉSISTANCE ÉLEVÉE

(30) Priorität: 30.07.2018 EP 18186345
(43) Veröffentlichungstag der Anmeldung: 09.06.2021
(73) Patentinhaber: SIKA TECHNOLOGY AG, 6340 Baar (CH)
(72) Erfinder: HÄBERLE, Hans, 78262 Gailingen (DE); BURCKHARDT, Urs, 8049 Zürich (CH)
(74) Vertreter: Sika Patent Attorneys
(86) Internationale Anmeldenummer: PCT/EP2019/069945
(87) Internationale Veröffentlichungsnummer: WO 2020/025422

(56) Entgegenhaltungen:
- EP-A2- 0 039 663
- WO-A1-2009/140344
- US-A- 5 302 303

## Beschreibung

### Technisches Gebiet

Die Erfindung betrifft zweikomponentige Polyurethanzusammensetzungen und deren Verwendung, insbesondere als Beschichtung.

### Stand der Technik

Zweikomponentige Polyurethanzusammensetzungen sind in der Bau- und Fertigungsindustrie weit verbreitet, beispielsweise als Klebstoffe, Abdichtungen, Beschichtungen, Anstriche, Giessharze oder Bindemittel (Harzmatrix) für Verbundwerkstoffe (Composites). Sie bestehen aus einer Polyolkomponente und einer Isocyanatkomponente, die separat voneinander gelagert werden. Für die Anwendung werden die beiden Komponenten miteinander vermischt, wodurch die Zusammensetzung zu einem polymeren elastischen Material aushärtet. Dabei enthält die Isocyanatkomponente typischerweise aromatische Isocyanate wie insbesondere Diphenylmethandiisocyanat (MDI) oder Derivate davon. Aliphatische Isocyanate werden aufgrund der viel höheren Kosten typischerweise nur dort eingesetzt, wo besonders hohe Ansprüche an die Vergilbungsbeständigkeit bestehen.

Klassische zweikomponentige Polyurethanzusammensetzungen auf Basis aromatischer Isocyanate haben eine für die nichtmaschinelle Anwendung gut handhabbare Offenzeit, neigen aber bei ungünstigen klimatischen Bedingungen bei der Applikation, insbesondere hoher Luftfeuchtigkeit und Temperatur, zur Blasenbildung und sind in Bezug auf die erreichbare Festigkeit nach der Aushärtung limitiert. Durch die Mitverwendung von Polyaminen in der Polyolkomponente kann die Blasenbildung zurückgedrängt und die Festigkeit in aller Regel gesteigert werden, meist aber auf Kosten der Dehnbarkeit und Elastizität. Zudem ist die Auswahl an möglichen Aminen, welche eine genügend lange Verarbeitungszeit ermöglichen, sehr eingeschränkt. Nur sterisch gehinderte und elektronisch deaktivierte aromatische Polyamine ermöglichen Verarbeitungszeiten, welche mit aromatischen Isocyanaten ohne maschinelle Vermischung und Applikation noch einigermassen handhabbar sind. Solche Polyamine sind aber oft fest bei Raumtemperatur, toxisch und verursachen Verfärbungen.

Anstelle von Polyaminen können auch Verbindungen mit temporär blockierten Aminogruppen, sogenannte latente Härter, eingesetzt werden, beispielsweise Oxazolidine, Ketimine oder Aldimine. Ihre Aktivierung verläuft durch Hydrolyse der blockierten Aminogruppen unter Freisetzung der Aminogruppen und des Blockierungsmittels. Latente Härter reagieren wegen den verzögert freigesetzten Aminogruppen zwar langsamer mit Isocyanaten als die freien Polyamine, sie sind aber trotzdem meist immer noch zu schnell für eine ausreichend lange Verarbeitungszeit mit aromatischen Isocyanaten. Zudem kann das freigesetzte Blockierungsmittel zu unerwünschter Geruchsbildung, Emission, Migration oder Weichmacherwirkung führen.

Aus WO 2009/140344 sind zweikomponentige Zusammensetzungen bekannt, welche Aminocrotonate oder Enaminone als Härter für Polyisocyanate einsetzen. Diese Härter zeigen eine unerwünscht kurze Offenzeit. Eine Kombination solcher Härter mit Polyolen ist nicht beschrieben.

### Darstellung der Erfindung

Aufgabe der vorliegenden Erfindung ist es daher, zweikomponentige Polyurethanzusammensetzungen mit langer Offenzeit zur Verfügung zu stellen, welche ohne Blasenbildung schnell aushärten und über eine hohe Festigkeit bei hoher Elastizität und Dehnbarkeit verfügen.

Diese Aufgabe wird mit der Zusammensetzung gemäss Anspruch 1 gelöst. Die Zusammensetzung enthält in der ersten Komponente mindestens ein Polyol und 1 bis 50 Gewichts-% mindestens eine Verbindung der Formel (II a) bezogen auf die Summe der mit Isocyanatgruppen reaktiven Bestandteile der ersten Komponente.

Durch die Mitverwendung der Verbindung lassen sich die Festigkeit und Zähigkeit, insbesondere das Elastizitätsmodul, der Weiterreisswiderstand und die Härte, überraschenderweise erheblich steigern, auch schon bei relativ geringer Einsatzmenge, ohne dass dabei Offenzeit oder Dehnbarkeit des Materials deutlich verkürzt werden. Dies konnte ausgehend vom Stand der Technik, bei welchem solche Verbindungen als alleinige Härter ohne Mitverwendung von Polyolen eingesetzt werden, nicht erwartet werden. Vorteilhaft an der Zusammensetzung ist auch der Umstand, dass bei deren Aushärtung keine ausgasenden oder weichmachenden Verbindungen freigesetzt werden, wodurch keine Probleme mit Geruchsemissionen oder Migrationseffekten bestehen.

Im Vergleich mit latenten Härtern, wie beispielsweise Aldiminen oder Ketiminen aus Isobutyraldehyd, Methylisobutylketon oder Cyclohexanon, ermöglicht die Kombination aus Polyol und Verbindung mit mindestens einer Reaktivgruppe der Formel (I) eine deutlich längere Offenzeit und keine Geruchsemissionen bei der Aushärtung.

Im Vergleich mit geruchlosen latenten Härtern, wie beispielsweise Aldiminen von 2,2-Dimethyl-3-lauroyloxypropanal, ermöglicht die Kombination aus Polyol und Verbindung mit mindestens einer Reaktivgruppe der Formel (I) deutlich höhere Festigkeiten.

Im Vergleich mit sterisch gehinderten und elektronisch deaktivierten aromatischen Polyaminen, wie beispielsweise 3,5-Dimethylthio-2,4(6)-toluylendiamin, ermöglicht die Kombination aus Polyol und der Verbindung mit mindestens einer Reaktivgruppe der Formel (I) deutlich längere Offenzeiten.

Die Zusammensetzung ist besonders geeignet als handverarbeitbare Beschichtung für Böden, wo eine lange Verarbeitungszeit (Offenzeit) und eine hohe Härte, Zähigkeit und Beständigkeit bei hoher Elastizität und minimale Emissionen gefordert sind. Solche Beschichtungen sind besonders widerstandsfähig gegenüber mechanischer Beanspruchung. Weiterhin besonders geeignet ist die Zusammensetzung als handverarbeitbare Beschichtung für die Abdichtung von flachen oder schwach geneigten Dächern (liquid applied membrane), wo eine genügend lange Verarbeitungszeit und eine hohe Dehnbarkeit kombiniert mit hohem Weiterreisswiderstand und eine moderate Härte gefordert sind. Solche Beschichtungen sind besonders vorteilhaft in Bezug auf Rissüberbrückung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Offenbart wird eine Zusammensetzung umfassend eine erste Komponente enthaltend
- mindestens ein Polyol und
- mindestens eine Verbindung mit mindestens einer Reaktivgruppe der Formel (I), 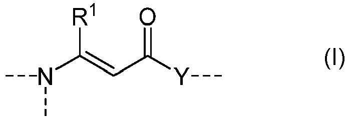
wobei R¹ für einen Alkyl-Rest mit 1 bis 8 C-Atomen oder einen Phenyl-Rest und Y für O, N oder C stehen und die Verbindung ein mittleres Molekulargewicht Mₙ von höchstens 2'500 g/mol aufweist,
und eine zweite Komponente enthaltend mindestens ein aromatisches Polyisocyanat und/oder mindestens ein aromatische Isocyanatgruppen-haltiges Polymer.

Eine gestrichelte Linie in den Formeln stellt jeweils die Bindung zum weiteren Molekülrest dar.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "aromatisch" wird eine Isocyanatgruppe bezeichnet, welche direkt an ein aromatisches C-Atom gebunden ist. Isocyanate mit ausschliesslich aromatischen Isocyanatgruppen werden entsprechend als "aromatische Isocyanate" bezeichnet. Als "aliphatisch" wird eine Isocyanatgruppe bezeichnet, welche direkt an ein aliphatisches oder cycloaliphatisches C-Atom gebunden ist. Isocyanate mit ausschliesslich aliphatischen Isocyanatgruppen werden entsprechend als "aliphatische Isocyanate" bezeichnet.

Als "aliphatisch" wird eine Aminogruppe bezeichnet, welche direkt an ein aliphatisches oder cycloaliphatisches oder arylaliphatisches C-Atom gebunden ist. Amine mit ausschliesslich aliphatischen Aminogruppen werden entsprechend als "aliphatische Amine" bezeichnet.

Als "primär" wird eine Aminogruppe bezeichnet, die an einen einzigen organischen Rest gebunden ist und zwei Wasserstoffatome am Stickstoffatom trägt; als "sekundär" wird eine Aminogruppe bezeichnet, die an zwei organische Reste, welche auch gemeinsam Teil eines Rings sein können, gebunden ist und ein Wasserstoffatom am Stickstoffatom trägt; und als "tertiär" wird eine Aminogruppe bezeichnet, die an drei organische Reste, welche auch zu zweit oder zu dritt Teil eines oder mehrerer Ringe sein können, gebunden ist und kein Wasserstoffatom am Stickstoffatom trägt.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Als "lagerstabil" oder "lagerfähig" wird eine Zusammensetzung bezeichnet, wenn sie bei Raumtemperatur in einem geeigneten Gebinde während längerer Zeit, typischerweise während mindestens 3 Monaten bis zu 12 Monaten und mehr, aufbewahrt werden kann, ohne dass sie sich in ihren Anwendungs- oder Gebrauchseigenschaften durch die Lagerung in einem für ihre Verwendung relevanten Ausmass verändert.

Als "Offenzeit" oder "Verarbeitungszeit" wird die Zeitspanne bezeichnet, in der die Zusammensetzung verarbeitet oder nachbearbeitet werden kann, nachdem der Aushärtungsprozess begonnen hat.

Als "Raumtemperatur" wird eine Temperatur von 23°C bezeichnet.

Die erste und die zweite Komponente der Zusammensetzung sind für sich allein lagerstabil und werden in voneinander getrennten Gebinden gelagert, bis sie kurz vor oder während der Applikation miteinander vermischt werden.

Die Reaktivgruppe der Formel (I) steht formal im Gleichgewicht mit ihren Tautomerformen. Insbesondere steht eine Reaktivgruppe der Formel (la) formal im Gleichgewicht mit den Tautomerformen der Formel (la') und (la").

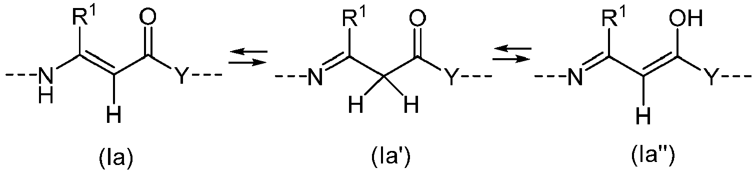

Alle möglichen Tautomerformen der Reaktivgruppe der Formel (I) werden im Rahmen der vorliegenden Offenbarung als gleichwertig angesehen.

Bevorzugt weist die Verbindung mit mindestens einer Reaktivgruppe der Formel (I) ein mittleres Molekulargewicht Mₙ von weniger als 1'000 g/mol auf. Eine solche Verbindung ermöglicht Zusammensetzungen mit besonders hoher Festigkeit.

Bevorzugt steht R¹ für einen Alkyl-Rest mit 1 bis 4 C-Atomen, insbesondere für Methyl. Diese Reaktivgruppen basieren auf technisch besonders gut verfügbaren und kostengünstigen Substanzen.

In einer bevorzugten Ausführungsform stellt die Verbindung mit mindestens einer Reaktivgruppe der Formel (I) eine Verbindung der Formel (II) dar, 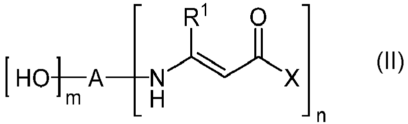 wobei
m für 0 oder 1 und n für 1 oder 2 oder 3 stehen und die Summe (m+n) für 2 oder 3 steht,
A für einen (m+n)-wertigen aliphatischen, cycloaliphatischen oder arylaliphatischen organischen Rest mit 2 bis 100 C-Atomen steht, und
X für einen Alkyl- oder Alkoxy-Rest mit 1 bis 8 C-Atomen, oder für einen Rest der Formel -NR²R³ steht, wobei R² und R³ unabhängig voneinander jeweils für H oder für einen gegebenenfalls Ether-Sauerstoff aufweisenden Alkyl-, Cycloalkyl-, Aralkyl- oder Aryl-Rest mit 1 bis 12 C-Atomen, oder zusammen für einen gegebenenfalls Ether-Sauerstoff aufweisenden Alkylen-Rest mit 3 bis 6 C-Atomen stehen,
und R¹ die bereits genannten Bedeutungen aufweist.

Dabei steht Y--- für X.

Bevorzugt steht (m+n) für 2.

Insbesondere steht A für einen zweiwertigen, gegebenenfalls Ether-Sauerstoff aufweisenden aliphatischen oder cycloaliphatischen oder arylaliphatischen Rest.

Bevorzugt weist A 6 bis 50, insbesondere 6 bis 25, C-Atome auf.

Besonders bevorzugt steht A für einen Rest ausgewählt aus der Gruppe bestehend aus 1,2-Ethylen, 1,3-Propylen, 2-Methyl-1,5-pentylen, 1,6-Hexylen, 1,3-Cyclohexylen-bis(methylen), 1,3-Phenylen-bis(methylen), (1,5,5-Trimethylcyclohexan-1-yl)methan-1,3, 3-Oxa-1,5-pentylen und α,ω-Polyoxypropylen mit einem mittleren Molekulargewicht Mₙ im Bereich von 170 bis 500 g/mol. Diese Verbindungen der Formel (II) sind gut zugänglich, einfach verarbeitbar und ermöglichen Zusammensetzungen mit guter Verarbeitbarkeit.

Am meisten bevorzugt steht A für α,ω-Polyoxypropylen mit einem mittleren Molekulargewicht Mₙ im Bereich von 170 bis 500 g/mol. Eine solche Verbindung der Formel (II) verfügt über eine gut handhabbare Viskosität und ermöglicht Zusammensetzungen mit einfacher Verarbeitbarkeit und besonders hoher Dehnbarkeit.

Bevorzugt steht X für einen Alkyl- oder Alkoxy-Rest mit 1 bis 4 C-Atomen, insbesondere für Methyl, Methoxy oder Ethoxy, oder für -NR²R³ wobei R² und R³ jeweils für einen Alkyl-Rest 1 bis 4 C-Atomen stehen, insbesondere für Diethylamino.

Besonders bevorzugt steht X für einen Rest ausgewählt aus Methyl, Ethoxy und Diethylamino. Diese Verbindungen der Formel (II) sind ausgehend von besonders gut verfügbaren und kostengünstigen Substanzen herstellbar. Davon bevorzugt ist Methyl oder Ethoxy.

Am meisten bevorzugt steht X für Ethoxy. Eine solche Verbindung der Formel (II) ist besonders einfach zugänglich, besonders niedrigviskos und ermöglicht besonders lange Offenzeiten.

Die bevorzugten Verbindungen der Formel (II) sind aus gut erhältlichen Ausgangsstoffen in einem einfachen Verfahren zugänglich und ermöglichen Zusammensetzungen mit besonders guten mechanischen Eigenschaften.

In einer besonders bevorzugten Verbindung der Formel (II) stehen m für 0, n für 2 oder 3 und A für einen zwei- oder dreiwertigen organischen Rest mit mindestens 2 Ethergruppen. Eine solche Verbindung der Formel (II) ermöglicht eine besonders lange Offenzeit und eine besonders hohe Dehnbarkeit.

Eine solche Verbindung der Formel (II) ist insbesondere eine Verbindung der Formel (II a), 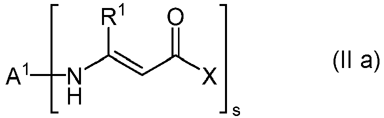 wobei s für 2 oder 3 steht, A¹ für einen zwei- oder dreiwertigen organischen Rest mit 6 bis 100 C-Atomen und mindestens 2 Ethergruppen steht, und R¹ und X die bereits genannten Bedeutungen aufweisen.

Bevorzugt weist A¹ 6 bis 50, insbesondere 6 bis 25, C-Atome auf.

Erfindungsgemäss steht s für 2 und A¹ steht für α,ω-Polyoxypropylen mit einem mittleren Molekulargewicht Mₙ im Bereich von 170 bis 500 g/mol, oder s steht für 3 und A¹ steht für einen von Trimethylolpropan oder Glycerin gestarteten dreiwertigen Polyoxypropylen-Rest mit einem mittleren Molekulargewicht Mₙ im Bereich von 300 bis 500 g/mol.

In einer besonders bevorzugten Verbindung der Formel (II a) stehen s für 2, A¹ für α,ω-Polyoxypropylen mit einem mittleren Molekulargewicht Mₙ im Bereich von 170 bis 500 g/mol und R¹ für Methyl. Bevorzugt steht X dabei für einen Rest ausgewählt aus Methyl, Ethoxy und Diethylamino, insbesondere für Ethoxy. Eine solche Verbindung ist besonders niedrigviskos und somit besonders einfach handhabbar und ermöglicht Zusammensetzungen mit besonders hoher Dehnbarkeit.

Am meisten bevorzugt ist eine Verbindung der Formel (II a), bei welcher s für 2, A¹ für α,ω-Polyoxypropylen mit einem mittleren Molekulargewicht Mₙ im Bereich von 170 bis 500 g/mol, R¹ für Methyl und X für Ethoxy stehen. Eine solche Verbindung stellt ein N,N'-Bis(ethylcrotonat-3-yl)polyoxypropylendiamin dar. Sie ist ganz besonders niedrigviskos und ermöglicht Zusammensetzungen mit besonders hoher Festigkeit und Dehnbarkeit.

In einer weiteren Verbindung der Formel (II) stehen m und n jeweils für 1. Eine solche Verbindung der Formel (II) ist ganz besonders niedrigviskos und ermöglicht somit eine besonders gute Verarbeitbarkeit, sowie eine besonders lange Offenzeit und eine besonders hohe Festigkeit, Dehnbarkeit und Zähigkeit. Eine solche Verbindung der Formel (II) ist insbesondere eine Verbindung der Formel (II b), 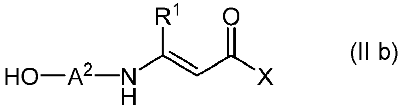 wobei A² für einen zweiwertigen aliphatischen, cycloaliphatischen oder arylaliphatischen organischen Rest mit 2 bis 50 C-Atomen steht, und R¹ und X die bereits genannten Bedeutungen aufweisen.

Bevorzugt weist A² 2 bis 25, insbesondere 2 bis 12, C-Atome auf.

Besonders bevorzugt steht A² für 1,2-Ethylen, 1,2-Propylen, 1,3-Propylen, 1,4-Butylen, 2,4-Butylen, 1,5-Pentlyen, 1,6-Hexylen, 1,7-Heptylen, 1,8-Octylen, 1,10-Decylen, 1,12-Dodecylen, 3-Oxa-1,5-pentylen, 3,6-Dioxa-1,8-octylen, 1,4-Phenylen-bis(ethylen) oder (1,5,5-Trimethylcyclohexan-1-yl)methan-1,3, insbesondere für 1,2-Ethylen oder 3-Oxa-1 ,5-pentylen.

In einer besonders bevorzugten Verbindung der Formel (II b) stehen A² für 1,2-Ethylen oder 3-Oxa-1,5-pentylen, R¹ für Methyl und X für einen Rest ausgewählt aus Methyl, Ethoxy und Diethylamino insbesondere für Ethoxy. Eine solche Verbindung ist bei Raumtemperatur flüssig und besonders niedrigviskos und somit besonders einfach handhabbar und ermöglicht Zusammensetzungen mit besonders hoher Festigkeit bei langer Offenzeit.

In einer weiteren Ausführungsform stellt die Verbindung mit mindestens einer Reaktivgruppe der Formel (I) eine Verbindung der Formel (III) dar, 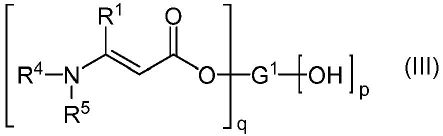 wobei
p für 0, 1 oder 2 und q für 1, 2 oder 3 stehen und die Summe (p+q) für 2 oder 3 steht,
G¹ für einen (p+q)-wertigen aliphatischen, cycloaliphatischen oder arylaliphatischen organischen Rest mit 2 bis 100 C-Atomen steht,
R⁴ für einen gegebenenfalls Ether-Sauerstoff aufweisenden Alkyl-, Cycloalkyl-, Aralkyl- oder Aryl-Rest mit 1 bis 12 C-Atomen steht,
R⁵ für H oder einen gegebenenfalls Ether-Sauerstoff aufweisenden Alkyl-, Cycloalkyl-, Aralkyl- oder Aryl-Rest mit 1 bis 12 C-Atomen steht,
oder R⁴ und R⁵ zusammen für einen gegebenenfalls Ether-Sauerstoff aufweisenden Alkylen-Rest mit 3 bis 6 C-Atomen stehen,
und R¹ die bereits genannten Bedeutungen aufweist.

Dabei steht Y für O.

Bevorzugt steht (p+q) für 2. Eine solche Verbindung der Formel (III) ist besonders niedrigviskos.

Weiterhin bevorzugt steht (p+q) für 3. Eine solche Verbindung ermöglicht besonders hohe Festigkeiten.

Bevorzugt weist G¹ 6 bis 50, insbesondere 6 bis 25, C-Atome auf.

Besonders bevorzugt stehen (p+q) für 2 und G¹ für einen α,ω-Polyoxyalkylen-Rest, insbesondere für einen Polyoxypropylen-Rest mit einem mittleren Molekulargewicht Mₙ im Bereich von 200 bis 500 g/mol.

Bevorzugt stehen R⁵ für H und R⁴ für einen Alkyl-, Cycloalkyl- oder Aralkyl-Rest mit 4 bis 12 C-Atomen, insbesondere für Butyl, Isobutyl, sek.Butyl, tert.Butyl, Isopentyl, 3-Methylbutyl, Hexyl, Cyclohexyl, Octyl, 2-Ethylhexyl, Lauryl oder Benzyl.

Weiterhin bevorzugt stehen R⁴ und R⁵ zusammen für 1,3-Propylen oder 1,4-Butylen und bilden zusammen mit dem Stickstoffatom einen Pyrrolidin-Ring oder einen Piperidin-Ring.

Am meisten bevorzugt steht R⁵ für H.

Solche Verbindungen der Formel (III) sind besonders einfach herstellbar, insbesondere im Vergleich zu ähnlichen Verbindungen, welche am Stickstoff zwei Wasserstoffatome aufweisen und nicht der Formel (III) entsprechen.

In einer besonders bevorzugten Verbindung der Formel (III) stehen p für 0, q für 2, G¹ für α,ω-Polyoxypropylen mit einem mittleren Molekulargewicht Mₙ im Bereich von 200 bis 500 g/mol und R¹ für Methyl.

Bevorzugt steht R⁵ dabei für H und R⁴ für einen Rest ausgewählt aus Butyl, Isobutyl, sek.Butyl, tert.Butyl, Isopentyl, 3-Methylbutyl, Hexyl, Cyclohexyl, Octyl, 2-Ethylhexyl, Lauryl, Benzyl, Hydroxyethyl und 2-(2-Hydroxyethoxy)ethyl. Eine solche Verbindung der Formel (III) ist einfach zugänglich, bei Raumtemperatur flüssig und ermöglicht Zusammensetzungen mit besonders hoher Dehnbarkeit.

In einer ganz besonders bevorzugten Verbindung der Formel (III) steht R⁵ für H und R⁴ steht für einen eine Hydroxylgruppe und gegebenenfalls Ether-Sauerstoff aufweisenden Alkyl-, Cycloalkyl-, Aralkyl- oder Aryl-Rest mit 1 bis 12 C-Atomen.

Eine solche Verbindung der Formel (III) verfügt über eine besonders hohe Funktionalität. Sie ist bei Raumtemperatur flüssig und ermöglicht bereits bei geringer Einsatzmenge eine hohe Festigkeit und eine besonders hohe Vernetzungsdichte. Eine solche Verbindung der Formel (III) ist insbesondere eine Verbindung der Formel (III a), 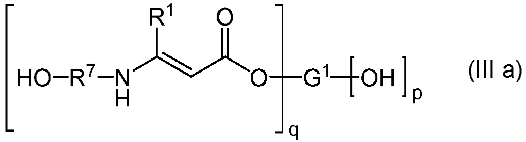 wobei R⁷ für einen zweiwertigen aliphatischen, cycloaliphatischen oder arylaliphatischen organischen Rest mit 2 bis 12 C-Atomen steht, und p, q, R¹ und G¹ die bereits genannten Bedeutungen aufweisen. Bevorzugt steht p für 0 und q für 2.

Bevorzugt steht R⁷ für 1,2-Ethylen oder 3-Oxa-1,5-pentylen, insbesondere für 1,2-Ethylen.

In einer weiteren Ausführungsform stellt die Verbindung mit mindestens einer Reaktivgruppe der Formel (I) für eine Verbindung der Formel (IV) dar, 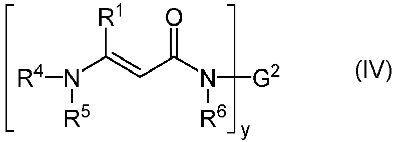 wobei
y für 2 oder 3 steht,
G² für einen y-wertigen aliphatischen, cycloaliphatischen oder arylaliphatischen organischen Rest mit 2 bis 100 C-Atomen steht,
R⁶ für H oder einen Alkyl-Rest mit 1 bis 6 C-Atomen steht,
und R¹, R⁴ und R⁵ die bereits genannten Bedeutungen aufweisen.

Dabei steht Y für N.

Bevorzugt steht y für 2.

Bevorzugt weist G² 6 bis 50, insbesondere 6 bis 25, C-Atome auf.

Insbesondere stehen y für 2 und G² für α,ω-Polyoxypropylen mit einem mittleren Molekulargewicht Mₙ im Bereich von 170 bis 500 g/mol.

Bevorzugt steht R⁶ für H oder für 2-Propyl, insbesondere für H.

Verbindungen der Formel (II) sind gegenüber Verbindungen der Formel (III) bevorzugt. Sie ermöglichen ausgehärtete Zusammensetzungen mit besonders hoher Stabilität gegenüber Hydrolyse.

Verbindungen der Formel (II) und (III) sind gegenüber Verbindungen der Formel (IV) aufgrund ihrer besonders niedrigen Viskosität bevorzugt.

Besonders bevorzugt ist die Verbindung mit mindestens einer Reaktivgruppe der Formel (I) ausgewählt aus der Gruppe bestehend aus Verbindungen der Formel (II a), Verbindungen der Formel (II b) und Verbindungen der Formel (III), wobei als Verbindungen der Formel (III) solche der Formel (III a) bevorzugt sind.

Eine Verbindung der Formel (II) wird insbesondere erhalten durch Umsetzung von mindestens einem Amin der Formel (V) mit mindestens einer 1,3-Dicarbonylverbindung der Formel (VI), 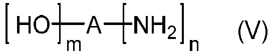 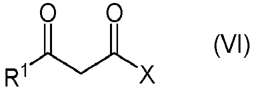 wobei m, n, A, R¹ und X die bereits genannten Bedeutungen aufweisen.

Für die Herstellung einer Verbindung der Formel (II a) wird mindestens ein Amin der Formel (V a) und für die Herstellung einer Verbindung der Formel (II b) wird mindestens ein Amin der Formel (V b) eingesetzt,

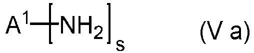

HO-A²-NH₂ (V b)

wobei A¹, s und A² die bereits genannten Bedeutungen aufweisen.

Dabei wird die 1,3-Dicarbonylverbindung der Formel (VI) bevorzugt stöchiometrisch oder in einem stöchiometrischen Überschuss in Bezug auf die primären Aminogruppen des Amins der Formel (V) eingesetzt. Die Umsetzung erfolgt bevorzugt bei Temperaturen unterhalb von 90°C, insbesondere bei 10 bis 80°C. Die Umsetzung kann säurekatalysiert oder auch katalysatorfrei durchgeführt werden. Das bei der Umsetzung gebildete Wasser wird bevorzugt entfernt, insbesondere durch Anlegen von Vakuum.

Geeignete Amine der Formel (V) sind aliphatische Amine, insbesondere - Aminoalkohle wie insbesondere 2-Aminoethanol, 2-Amino-1-propanol, 1-Ami-no-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethylcyclohexanol, oder eine primäre Aminogruppe tragende Derivate von Glykolen wie Diethylenglykol, Dipropylenglykol, Dibutylenglykol oder höheren Oligomeren oder Polymeren dieser Glykole, insbesondere 2-(2-Aminoethoxy)ethanol oder 2-(2-(2-Aminoethoxy)ethoxy)ethanol,
- primäre aliphatische Diamine wie insbesondere 1,2-Ethandiamin, 1,2-Propandiamin, 1,3-Propandiamin, 1,4-Butandiamin, 1,3-Butandiamin, 2-Methyl-1,2-propandiamin, 1,3-Pentandiamin, 1,5-Pentandiamin, 2,2-Dimethyl-1,3-propandiamin, 1,6-Hexandiamin, 1,5-Diamino-2-methylpentan, 1,7-Heptandiamin, 1,8-Octandiamin, 2,5-Dimethyl-1,6-hexandiamin, 1,9-Nonandiamin, 2,2(4),4-Trimethyl-1,6-hexandiamin, 1,10-Decandiamin, 1,11-Undecandiamin, 2-Butyl-2-ethyl-1,5-pentandiamin, 1,12-Dodecandiamin, 1,2-Cyclohexandiamin, 1,3-Cyclohexandiamin, 1,4-Cyclohexandiamin, 1-Amino-3-aminomethyl-3,5,5-trimethylcyclohexan, 4(2)-Methyl-1,3-cyclohexandiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis-(4-amino-3,5-dimethylcyclohexyl)methan, Bis(4-amino-3-ethyl-5-methylcyclohexyl)methan, 2,5(2,6)-Bis(aminomethyl)bicyclo[2.2.1]heptan, 3(4),8(9)-Bis-(aminomethyl)tricyclo[5.2.1.0^{2,6}]decan, 1,3-Bis(aminomethyl)benzol, 1,4-Bis-(aminomethyl)benzol, 3-Oxa-1,5-pentandiamin, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, α,ω-Polyoxypropylendiamin mit einem mittleren Molekulargewicht Mₙ im Bereich von 200 bis 2'000 g/mol, insbesondere die Jeffamine^{®}-Typen D-230, D-400 oder XTJ-582, (alle von Huntsman), α,ω-Polyoxypropylenpolyoxyethylen-diamin, insbesondere die Jeffamine^{®}-Typen ED-600 oder ED-900 (beide von Huntsman), α,ω-Polyoxypropylenpolyoxy-1,4-butylendiamin, insbesondere Jeffamine^{®} THF-100 (von Huntsman) oder α,ω-Polyoxypropylenpolyoxy-1,2-butylendiamin, insbesondere Jeffamine^{®} XTJ-568 (von Huntsman), oder
- primäre aliphatische Triamine wie insbesondere 1,3,6-Triaminohexan, 1,4,8-Triaminooctan, 4-Aminomethyl-1,8-octandiamin, 5-Aminomethyl-1,8-octandi-amin, 1,6,11-Triaminoundecan, 1,3,5-Triaminocyclohexan, 1,3,5-Tris-(aminomethyl)cyclohexan, 1,3,5-Tris(aminomethyl)benzol, Trimethylolpropan- oder Glycerin-gestartetes Tris(ω-polyoxypropylenamin) mit einem mittleren Molekulargewicht Mₙ im Bereich von 380 bis 2'000 g/mol, insbesondere Jeffamine^{®} T-403 (von Huntsman), oder Trimethylolpropan-gestartetes Tris(ω-polyoxypropylen-polyoxy-1,2-butylenamin), insbesondere Jeffamine^{®} XTJ-566 (von Huntsman).

Davon bevorzugt sind Aminoalkohole, also Amine der Formel (V b), sowie Polyetherdiamine und Polyethertriamine, also Amine der Formel (V a).

Besonders bevorzugt ist das Amin ausgewählt aus der Gruppe bestehend aus 2-Aminoethanol, 3-Amino-1-propanol, 3-Aminomethyl-3,5,5-trimethylcyclohexanol, 2-(2-Aminoethoxy)ethanol, α,ω-Polyoxypropylendiaminen mit einem mittleren Molekulargewicht Mₙ im Bereich von 200 bis 530 g/mol, insbesondere Jeffamine^{®} D-230, D-400 oder XTJ-582, und Trimethylolpropan- oder Glycerin-gestarteten Polyoxypropylentriaminen mit einem mittleren Molekulargewicht Mₙ im Bereich von 300 bis 550 g/mol, insbesondere Jeffamine^{®} T-403.

Davon bevorzugt ist 2-Aminoethanol, 2-(2-Aminoethoxy)ethanol oder α,ω-Polyoxypropylendiamine mit einem mittleren Molekulargewicht Mₙ im Bereich von 200 bis 530 g/mol. Diese Amine ermöglichen besonders bevorzugte Verbindungen der Formel (II a) oder (II b).

Geeignete 1,3-Dicarbonylverbindungen der Formel (VI) sind insbesondere 1,3-Diketone wie insbesondere Acetylaceton, oder 1,3-Ketoester wie insbesondere Ethylacetoacetat, oder 1,3-Ketoamide wie insbesondere N,N-Diethyl-3-oxobutanamid. Besonders bevorzugt ist Ethylacetoacetat. Diese Dicarbonylverbindungen sind besonders gut verfügbar und ermöglichen Verbindungen der Formel (II) mit guten Eigenschaften.

Eine Verbindung der Formel (III) wird insbesondere erhalten durch Umesterung von mindestens einem Polyol der Formel (VII) mit mindestens einem β-Ketoester der Formel (VIII) und nachfolgender Umsetzung mit mindestens einem Amin der Formel (IX), 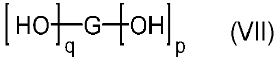 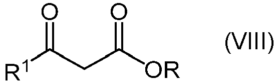 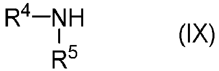 wobei p, q, G, R¹, R⁴ und R⁵ die bereits genannten Bedeutungen aufweisen.

Für die Herstellung einer Verbindung der Formel (III a) wird mindestens ein Amin der Formel (IX a) eingesetzt,

HO-R⁷-NH₂ (IX a)

wobei R⁷ die bereits genannten Bedeutungen aufweist.

Für die Umesterung werden pro mol Polyol der Formel (VII) ungefähr q mol β-Ketoester der Formel (VIII) eingesetzt und der freigesetzte Alkohol HOR wird bevorzugt mittels Destillation im Vakuum entfernt. Dabei entsteht eine Verbindung der Formel 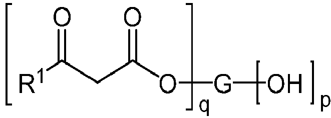 als Zwischenprodukt, welche anschliessend mit dem Amin der Formel (IX) umgesetzt wird, gegebenenfalls in Anwesenheit einer Säure als Katalysator. Das bei der Umsetzung gebildete Wasser wird bevorzugt entfernt, insbesondere durch Anlegen von Vakuum.

Geeignete Polyole der Formel (VII) sind insbesondere handelsübliche Verbindungen mit zwei oder drei OH-Gruppen, insbesondere oligomere oder polymere Diole oder Triole.

Bevorzugt sind Polyetherdiole oder -triole, insbesondere Dipropylenglykol, Tripropylenglykol, Diethylenglykol, Triethylenglykol, Trimethylolpropan oder Glycerin, sowie deren Alkoxylate, sowie höhere polymere Polyoxyethylendi- oder triole, Polyoxypropylendi- oder -triole, oder gemischte Polyoxyethylen-polyoxypropylendioder triole.

Besonders bevorzugt sind Polyoxypropylendiole mit einem mittleren Molekulargewicht Mₙ im Bereich von 200 bis 2'000 g/mol, bevorzugt 200 bis 530 g/mol.

Ein besonders geeigneter β-Ketoester der Formel (VIII) ist tert.Butylacetoacetat. Damit erfolgt die Umesterung mit dem Polyol besonders einfach, und der freigesetzte Alkohol und dessen Folgeprodukte lassen sich leicht entfernen.

Als Amin der Formel (IX) sind handelsübliche primäre oder sekundäre Monoamine oder Aminoalkohole (Amine der Formel (IX a) geeignet, insbesondere aliphatische, cycloaliphatische oder arylaliphatische Typen, insbesondere Butylamin, Isobutylamin, sek.Butylamin, tert.Butylamin, Isopentylamin, 3-Methylbutylamin, Hexylamin, Cyclohexylamin, Octylamin, 2-Ethylhexylamin, Laurylamin, Benzylamin, 2-Aminoethanol, 2-(2-Aminoethoxy)ethanol oder Pyrrolidin.

Eine Verbindung der Formel (IV) wird insbesondere erhalten durch Umsetzung von mindestens einem Amin der Formel (X) mit mindestens einem β-Ketoester der Formel (VIII) und nachfolgender Umsetzung mit mindestens einem Amin der Formel (IX), 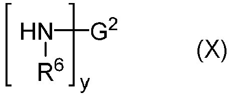 wobei y, G² und R⁶ die bereits genannten Bedeutungen aufweisen.

Für die Umsetzung werden zuerst ungefähr y mol β-Ketoester der Formel (VIII) pro mol Amin der Formel (X) bei Temperaturen von mindestens 100°C, bevorzugt etwa 110 bis 130°C, umgesetzt und der freigesetzte Alkohol HOR bevorzugt mittels Destillation im Vakuum entfernt. Dabei entsteht eine Verbindung der Formel 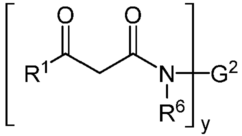 als Zwischenprodukt, welche anschliessend mit dem Amin der Formel (IX) umgesetzt wird, gegebenenfalls in Anwesenheit einer Säure als Katalysator. Das dabei gebildete Wasser wird bevorzugt entfernt, insbesondere durch Anlegen von Vakuum.

Als Amin der Formel (X) geeignet sind insbesondere α,ω-Polyoxypropylendiamine mit primären Aminogruppen und einem mittleren Molekulargewicht Mₙ im Bereich von 200 bis 530 g/mol, insbesondere Jeffamine^{®} D-230, D-400 oder XTJ-582, oder analoge Typen mit sekundären Aminogruppen, insbesondere Jeffamine^{®} SD-231 oder SD-401 (alle von Huntsman).

Als β-Ketoester der Formel (VIII) und Amin der Formel (IX) sind die bereits genannten geeignet und bevorzugt.

Die Reaktivgruppe der Formel (I) ist eine vinyloge Urethangruppe bzw. vinyloge Harnstoffgruppe bzw. vinyloge Amidgruppe, abhängig davon, ob Y für O, N oder C steht. Sie ist hydrolysebeständig und hat die Fähigkeit, ohne Freisetzung von Abspaltern mit Isocyanatgruppen zu reagieren. Dies unterscheidet sie von latenten Härtern wie Oxazolidinen, Aldiminen oder Ketiminen, deren blockierte Aminogruppen hydrolysieren und über die Abspaltung eines Blockierungsmittels mit Isocyanatgruppen reagieren.

Die Reaktion verläuft über die Addition des nucleophilen Enamin-Kohlenstoffs der Reaktivgruppe der Formel (I) an die Isocyanatgruppe, wobei eine Gruppierung der Formel 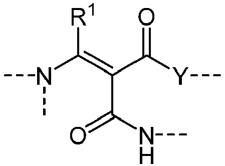 entsteht.

Die erste Komponente enthält mindestens ein Polyol.

Geeignet sind insbesondere bei Raumtemperatur flüssige Polyole.

Bevorzugt sind Polyole mit einem mittleren Molekulargewicht Mₙ im Bereich von 400 bis 20'000 g/mol, bevorzugt 500 bis 10'000 g/mol, insbesondere 500 bis 5'000 g/mol.

Bevorzugt sind Polyole mit einer mittleren OH-Funktionalität im Bereich von 1.6 bis 4, besonders bevorzugt von 1.8 bis 3.

Besonders bevorzugt sind Polyole mit einem mittleren Molekulargewicht Mₙ im Bereich von 500 bis 10'000 g/mol und einer mittleren OH-Funktionalität im Bereich von 1.8 bis 3.

Geeignete Polyole als Bestandteil der ersten Komponente sind insbesondere die folgenden handelsüblichen Polyole oder Mischungen davon:
- Polyetherpolyole, insbesondere Polyoxyalkylendiole und/oder Polyoxyalkylentriole, insbesondere Polymerisationsprodukte von Ethylenoxid, 1,2-Propylenoxid, 1,2- oder 2,3-Butylenoxid, Oxetan, Tetrahydrofuran oder Mischungen davon, wobei diese mit Hilfe eines Startermoleküls mit zwei oder mehreren aktiven Wasserstoffatomen polymerisiert werden, insbesondere einem Startermolekül wie Wasser, Ammoniak oder einer Verbindung mit mehreren OH-oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3-oder 1,4-Cyclohexandimethanol, Bisphenol A, hydriertes Bisphenol A, 1,1,1-Trimethylolethan, 1,1,1-Trimethylolpropan, Glycerin, Anilin, Ethylendiamin oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).
   Bevorzugte Polyetherpolyole sind Polyoxypropylendiole, Polyoxypropylentriole oder Ethylenoxid-terminierte (EO-endcapped) Polyoxypropylendiole oder-triole. Letztere sind Polyoxyethylen-polyoxypropylen-Mischpolyole (Block-Copolymere), die insbesondere dadurch erhalten werden, dass Polyoxypropylendiole oder -triole nach Abschluss der Polypropoxylierungsreaktion mit Ethylenoxid weiter alkoxyliert werden und dadurch schliesslich mehrheitlich primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind Polyesterdiole aus der Umsetzung von zweiwertigen Alkoholen wie insbesondere 1,2-Ethandiol, Diethylenglykol, 1,2-Propandiol, Dipropylenglykol, 1,4-Butandiol, 1,5-Pentandiol, 3-Methyl-1,5-pentandiol, 1,6-Hexandiol, Neopentylglykol, oder dreiwertigen Alkoholen wie Glycerin, 1,1,1-Trimethylolpropan oder Mischungen der vorgenannten Alkohole, mit organischen Dicarbonsäuren oder deren Anhydride oder Ester, wie insbesondere Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure oder Hexahydrophthalsäure oder Mischungen der vorgenannten Säuren, oder Polyesterpolyole aus Lactonen wie insbesondere ε-Caprolacton. Besonders bevorzugt sind Polyesterpolyole aus Adipinsäure oder Sebacinsäure oder Dodecandicarbonsäure und Hexandiol oder Neopentylglykol.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, auch Fettsäurepolyole genannt, insbesondere natürliche, gegebenenfalls mit Ketonharzen modifizierte Fette und Öle, inbesondere Ricinusöl oder Umsetzungsprodukte von Ricinusöl mit Ketonharzen; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Polyole, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; sowie hydrierte polyhydroxyfunktionelle Polymere oder Copolymere von Dienen.

Bevorzugte Polyole sind Polyetherpolyole, Polyetherpolyole mit darin dispergierten oder aufgepfropften Polymerpartikeln, insbesondere solche mit Styrol-Acrylnitril-Partikeln (SAN), Polyesterpolyole, Polycarbonatpolyole, Poly(meth)acrylatpolyole, Polybutadienpolyole oder Fettsäurepolyole, insbesondere Polyetherpolyole oder Fettsäurepolyole.

Besonders bevorzugte Polyole sind Polyetherpolyole, insbesondere Polyoxyalkylenpolyole, insbesondere Polyoxypropylenpolyole oder Polyoxyethylen-polyoxypropylen-Mischpolyole, welche gegebenenfalls darin dispergierte oder aufgepfropfte Styrol-Acrylnitril-Partikel enthalten. Polyetherpolyole ermöglichen eine besonders hohe Flexibilität, wie sie beispielsweise für Dachabdichtungen erwünscht ist, wobei darin dispergierte oder aufgepfropfte Styrol-Acrylnitril-Partikel eine höhere Festigkeit ermöglichen können.

Weiterhin besonders bevorzugt sind Fettsäurepolyole, insbesondere Ricinusöl oder Derivate von Ricinusöl. Fettsäurepolyole ermöglichen eine besonders hohe Festigkeit und Zähigkeit, wie sie für Bodenbeschichtungen erwünscht ist. Insbesondere bevorzugt sind Umsetzungsprodukte von Ricinusöl mit Ketonharzen. Solche Polyole sind kommerziell erhältlich, insbesondere als Setathane^{®} D 1150 (von Nuplex) oder Sovermol^{®} 805 (von BASF).

In einer bevorzugten Ausführungsform der Erfindung enthält die Zusammensetzung mindestens ein Fettsäure-basiertes Polyol mit einem mittleren Molekulargewicht Mₙ im Bereich von 500 bis 2'000 g/mol, insbesondere in Form eines Umsetzungsprodukts mit einem Ketonharz und insbesondere auf der Basis von Ricinusöl oder einem Derivat von Ricinusöl. Ein solches Polyol ermöglicht Zusammensetzungen von besonders hoher Festigkeit bei hoher Dehnbarkeit, welche besonders geeignet sind für mechanisch besonders beanspruchte Beschichtungen wie beispielsweise Bodenbeschichtungen.

In einer weiteren bevorzugten Ausführungsform der Erfindung enthält die Zusammensetzung mindestens ein Polyethertriol mit einem mittleren Molekulargewicht Mₙ im Bereich von 3'000 bis 6'000 g/mol, insbesondere mit darin dispergierten oder aufgepfropften Styrol-Acrylnitril-Partikeln. Ein solches Polyol ermöglicht Zusammensetzungen mit besonders guten rissüberbrückenden Eigenschaften und besonders hoher Dehnbarkeit, welche besonders geeignet sind für die Beschichtung und/oder Abdichtung von Dachflächen.

Besonders bevorzugt ist das Polyol ausgewählt aus der Gruppe bestehend aus Fettsäure-basierten Polyolen mit einem mittleren Molekulargewicht Mₙ im Bereich von 500 bis 2'000 g/mol und Polyethertriolen mit einem mittleren Molekulargewicht Mₙ im Bereich von 3'000 bis 6'000 g/mol, insbesondere mit darin dispergierten oder aufgepfropften Styrol-Acrylnitril-Partikeln.

Bevorzugt als Polyol sind insbesondere auch Mischungen von zwei oder mehr Polyolen.

Die Zusammensetzung enthält in der zweiten Komponente mindestens ein aromatisches Polyisocyanat und/oder mindestens ein aromatische Isocyanatgruppen-haltiges Polymer.

Als aromatisches Polyisocyanat bevorzugt sind Diisocyanate, insbesondere 4,4'-oder 2,4'- oder 2,2'-Diphenylmethandiisocyanat oder Gemische davon (MDI), 2,4-Toluylendiisocyanat, gegebenenfalls mit Anteilen von 2,6-Toluylendiisocyanat (TDI), 1,3-Phenylendiisocyanat oder 1,4-Phenylendiisocyanat oder Gemische davon.

Als aromatisches Polyisocyanat bevorzugt sind weiterhin höherfunktionelle Polyisocyanate, insbesondere MDI-Homologe und deren Gemische mit MDI (polymeres MDI oder PMDI), oder bei Raumtemperatur flüssige Derivate von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen. Diese weisen insbesondere eine mittlere NCO-Funktionalität im Bereich von 2.1 bis 4.0 auf.

Als aromatisches Polyisocyanat besonders bevorzugt ist TDI, MDI, PMDI oder ein bei Raumtemperatur flüssiges Derivat von MDI, insbesondere ein Gemisch von MDI mit MDI-Carbodiimiden.

Besonders bevorzugt enthält die Zusammensetzung als aromatisches Polyisocyanat 4,4'-Diphenylmethandiisocyanat, wobei gegebenenfalls Anteile von 2,4'-oder 2,2'-Diphenylmethandiisocyanat und/oder Derivate von 4,4'-Diphenylmethandiisocyanat oder Homologe von 4,4'-Diphenylmethandiisocyanat enthalten sind.

Ein geeignetes aromatische Isocyanatgruppen-haltiges Polymer wird insbesondere erhalten aus der Umsetzung von mindestens einem Polyol mit einer überstöchiometrischen Menge von mindestens einem aromatischen Polyisocyanat, insbesondere Diisocyanat, bevorzugt MDI oder TDI. Die Umsetzung wird bevorzugt unter Feuchtigkeitsausschluss bei einer Temperatur im Bereich von 50 bis 160°C durchgeführt, gegebenenfalls in Anwesenheit geeigneter Katalysatoren. Gegebenenfalls wird das Polymer unter Mitverwendung von Weichmachern oder Lösemitteln hergestellt, wobei die verwendeten Weichmacher oder Lösemittel keine gegenüber Isocyanaten reaktiven Gruppen enthalten.

Bevorzugt wird der Überschuss an Polyisocyanat so gewählt, dass im Polymer nach der Umsetzung aller Hydroxylgruppen ein Gehalt an freien Isocyanatgruppen im Bereich von 1 bis 30 Gewichts-%, bevorzugt 1.5 bis 25 Gewichts-%, besonders bevorzugt 2 bis 20 Gewichts-%, bezogen auf das gesamte Polymer verbleibt.

Ein solches Isocyanatgruppen-haltiges Polymer weist bevorzugt ein mittleres Molekulargewicht Mₙ im Bereich von 350 bis 6'000 g/mol auf.

Geeignete Polyole für die Herstellung eines Isocyanatgruppen-haltigen Polymers sind die bereits als Bestandteil der ersten Komponente genannten Polyole.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, insbesondere Polyoxyalkylenpolyole. Am meisten bevorzugt sind Polyoxypropylendi- oder -triole oder Ethylenoxid-terminierte Polyoxypropylendi- oder -triole.

Bevorzugt sind Polyole mit einem mittleren Molekulargewicht Mₙ im Bereich von 400 bis 20'000 g/mol, insbesondere 1'000 bis 15'000 g/mol.

Bevorzugt sind Polyole mit einer mittleren OH-Funktionalität im Bereich von 1.8 bis 3.

Bevorzugt sind bei Raumtemperatur flüssige Polyole.

Bei der Herstellung eines Isocyanatgruppen-haltigen Polymers können auch Anteile von zwei- oder mehrfunktionellen Alkoholen mitverwendet werden, insbesondere 1,2-Ethandiol, 1,2-Propandiol, 1,3-Propandiol, 2-Methyl-1,3-propandiol, 1,2-Butandiol, 1,3-Butandiol, 1,4-Butandiol, 1,3-Pentandiol, 1,5-Pentandiol, 3-Methyl-1,5-pentandiol, Neopentylglykol, Dibromneopentylglykol, 1,2-Hexandiol, 1,6-Hexandiol, 1,7-Heptandiol, 1,2-Octandiol, 1,8-Octandiol, 2-Ethyl-1,3-hexandiol, Diethylenglykol, Triethylenglykol, Dipropylenglykol, Tripropylenglykol, 1,3-oder 1,4-Cyclohexandimethanol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythrit, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Bevorzugt als Bestandteil der zweiten Komponente sind insbesondere auch Kombinationen aus einem oder mehreren Polyisocyanaten und einem oder mehreren Isocyanatgruppen-haltigen Polymeren.

Als Bestandteil der ersten Komponente kann die Zusammensetzung weitere mit Isocyanaten reaktive Substanzen enthalten, insbesondere
- zwei- oder mehrfunktionelle Alkohole, insbesondere solche mit einem mittleren Molekulargewicht Mₙ im Bereich von 250 bis 500 g/mol, insbesondere ethoxyliertes und/oder propoxyliertes Bisphenol A, Bisphenol F, Trimethylolpropan oder Glycerin,
- Kettenverlängerer, insbesondere Diole mit einem Molekulargewicht Mₙ im Bereich von 62 bis 150 g/mol, insbesondere Ethylenglykol, 1,3-Propandiol, 1,4-Butandiol oder 1,5-Pentandiol,
- geringe Mengen von primären Polyaminen, insbesondere um mit dem Vermischen der beiden Komponenten unmittelbar ein strukturviskoses, standfestes, weniger stark abfliessendes Material zu erhalten,
- Aminoalkohole, oder
- latente Härter wie insbesondere Ketimine, Aldimine oder Oxazolidine.

Bevorzugt enthält die Zusammensetzung zusätzlich zu mindestens einem Polyol mindestens einen weiteren zwei- oder mehrfunktionellen Alkohol mit einem mittleren Molekulargewicht Mₙ im Bereich von 250 bis 500 g/mol, insbesondere ausgewählt aus ethoxyliertem und/oder propoxyliertem Trimethylolpropan, ethoxyliertem und/oder propoxyliertem Glycerin, ethoxyliertem und/oder propoxyliertem Bisphenol A und ethoxyliertem und/oder propoxyliertem Bisphenol F. Ein solcher Alkohol ermöglicht hohe Festigkeiten.

Als Bestandteil der zweiten Komponente kann die Zusammensetzung zusätzlich auch aliphatische Polyisocyanate oder Polymere mit aliphatischen Isocyanatgruppen enthalten, insbesondere 1,6-Hexamethylendiisocyanat (HDI), 1-lsocyanato-3,3,5-trimethyl-5-isocyanatomethylcyclohexan (Isophorondiisocyanat oder IPDI), oder davon abgeleitete Oligomere, Derivate oder Polymere, insbesondere ein IPDI-Isocyanurat oder ein gemischtes Isocyanurat auf Basis TDI/HDI oder ein HDI-Oligomer.

Die Zusammensetzung kann zusätzlich weitere Bestandteile enthalten, insbesondere die folgenden Hilfs- und Zusatzmittel:
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Pigmente, insbesondere Titandioxid, Chromoxid, Eisenoxide oder organische Pigmente;
- Weichmacher, insbesondere Phthalate, Terephthalate, Trimellitate, Adipate, Sebacate, Azelate, Succinate, Citrate, Benzoate, Diester von ortho-Cyclohexandicarbonsäure, acetyliertes Glycerin, Monoglyceride, Fettsäuremethyl- oder -ethylester, auch "Biodiesel" genannt, natürliche oder modifizierte Pflanzenöle, organische Phosphor- oder Sulfonsäureester, Sulfonsäureamide, Urethane, hochsiedende Kohlenwasserstoffe, Polybutene, Polyisobutylene, Polystyrole oder Chlorparaffine;
- Lösemittel, insbesondere solche, wie sie üblicherweise in Farben, Lacken oder Beschichtungen verwendet werden;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Ricinusöl, hydriertes Ricinusöl, Polyamide, Polyurethane, pyrogene Kieselsäuren oder hydrophob modifizierte Polyoxyethylene;
- Trocknungsmittel, insbesondere Molekularsiebe, Calciumoxid, Mono-Oxazolidine wie Incozol^{®} 2 (von Incorez) oder Orthoameisensäureester;
- Haftvermittler, insbesondere Titanate oder Organoalkoxysilane wie Aminosilane, Mercaptosilane, Epoxysilane, Vinylsilane, (Meth)acrylsilane, Carbamatosilane, Alkylsilane, S-(Alkylcarbonyl)mercaptosilane, Aldiminosilane oder oligomere Formen dieser Silane;
- Katalysatoren, welche die Reaktion der Isocyanatgruppen beschleunigen, insbesondere Verbindungen von Zinn, Eisen, Bismut, Zink, Mangan, Chrom, Kobalt, Kupfer, Nickel, Molybdän, Blei, Cadmium, Quecksilber, Antimon, Vanadium, Titan, Aluminium, Kalium oder seltenen Erdmetallen, insbesondere Organozinn(IV)-Verbindungen wie Dibutylzinndiacetat, Dibutylzinndilaurat, Dimethylzinndilaurat, Dibutylzinndichlorid, Dibutylzinndiacetylacetonat oder Dioctylzinndilaurat, Bismut(III)-Komplexverbindungen, Zink(II)-acetat, Zink(II)-2-ethylhexanoat, Zink(II)-laurat, Zink(II)-acetylacetonat, Kobalt(II)-2-ethylhexanoat, Kupfer(II)-2-ethylhexanoat, Nickel(II)-naphthenat, Aluminiumlactat, Aluminiumoleat, Diisopropoxytitan-bis-(ethylacetoacetat); tertiäre Aminogruppen enthaltende Verbindungen, insbesondere N-Ethyl-diisopropylamin, N,N,N',N'-Tetramethylalkylendiamine, Pentamethylalkylentriamine und höhere Homologe davon, Bis-(N,N-diethylaminoethyl)adipat, Tris-(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), 2,2'-Dimorpholinodiethylether (DMDEE), N-Alkylmorpholine, N,N'-Dimethylpiperazin; stickstoffaromatische Verbindungen wie 4-Dimethylaminopyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris-(1,3-dichlor-2-propyl)phosphat, Tris(2-chlorethyl)phosphat, Tris(2-ethylhexyl)-phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat), Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Solche Zusätze können als Bestandteil der ersten oder der zweiten Komponente vorhanden sein. Mit Isocyanatgruppen reaktive Substanzen sind bevorzugt ein Bestandteil der ersten Komponente. Es kann sinnvoll sein, gewisse Bestandteile vor dem Einmischen in die jeweilige Komponente chemisch oder physikalisch zu trocknen.

Bevorzugt enthält die Zusammensetzung zusätzlich mindestens einen weiteren Bestandteil, insbesondere ausgewählt aus Füllstoffen, Haftvermittlern, Trocknungsmitteln, Katalysatoren und Stabilisatoren. Bevorzugt enthält die Zusammensetzung mehrere solche weitere Bestandteile.

Die Zusammensetzung enthält erfindungsgemäss 1 bis 50 Gewichts-%, besonders bevorzugt 2 bis 25 Gewichts-%, insbesondere 5 bis 15 Gewichts-%, Verbindungen mit mindestens einer Reaktivgruppen der Formel (I) bezogen auf die Summe der mit Isocyanatgruppen reaktiven Bestandteile der ersten Komponente.

In der Zusammensetzung liegt das Verhältnis zwischen (i) der Anzahl OH-Gruppen und Reaktivgruppen der Formel (I) der Verbindung mit mindestens einer Reaktivgruppen der Formel (I) und (ii) der Anzahl OH-Gruppen der Polyole bevorzugt im Bereich von 0.01 bis 1.0, besonders bevorzugt 0.025 bis 0.5, insbesondere 0.05 bis 0.4.

In der Zusammensetzung liegt das Verhältnis der gegenüber Isocyanaten reaktiven Gruppen, also Hydroxylgruppen, Reaktivgruppen der Formel (I) und gegebenenfalls vorhandenen weiteren Reaktivgruppen, zu den Isocyanatgruppen bevorzugt im Bereich von 0.5 bis 1.1, insbesondere 0.7 bis 1.05.

Die Konsistenz beider Komponenten der Zusammensetzung ist geeigneterweise so, dass sie mit einfachen Verfahren gut vermischt werden können. Dazu sind sowohl flüssige als auch pastöse Komponenten geeignet, wobei die Viskosität der flüssigen oder pastösen Komponenten bei Raumtemperatur bevorzugt so niedrig ist, dass die Dosierung und Vermischung von Hand oder mit handelsüblichen Dosiersystemen und dynamischen oder statischen Mischern auf einfache Weise erfolgen kann. Für die Verwendung als Beschichtung weisen beide Komponenten bei Raumtemperatur bevorzugt eine flüssige oder nur leicht strukturviskose Konsistenz und eine niedrige Viskosität auf.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Masse entsteht. Jede Komponente wird in einem separaten feuchtigkeitsdichten Gebinde gelagert. Geeignete Gebinde sind insbesondere ein Fass, ein Container, ein Hobbock, ein Eimer, ein Kanister, eine Büchse, ein Beutel, ein Schlauchbeutel, eine Kartusche oder eine Tube. Die Komponenten sind lagerstabil.

Zur Anwendung der Zusammensetzung werden die beiden Komponenten und gegebenenfalls vorhandene weitere Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von 1:2 bis 20:1, insbesondere 1:1 bis 10:1.

Typischerweise sind die beiden Komponenten vorkonfektioniert, so dass der Inhalt der Gebinde dem Mischungsverhältnis entspricht. Ist dies nicht der Fall, beispielsweise im Fall von Grossgebinden, so werden die Komponenten entsprechend dem Mischungsverhältnis geeigneterweise einzeln abgewogen.

Das Vermischen der beiden Komponenten erfolgt typischerweise mit einem mechanischen Rührwerk, insbesondere einem Doppelwellenrührer. Möglich sind auch kontinuierlich arbeitende Mischaggregate mit statischen oder dynamischen Mischern. Beim Mischen ist darauf zu achten, dass die Komponenten möglichst homogen vermischt werden. Bei einer unzureichenden Vermischung treten lokale Abweichungen vom vorteilhaften Mischungsverhältnis auf, welches sich in einer Verschlechterung der mechanischen Eigenschaften und/oder Blasenbildung auswirken kann. Wird vor der Applikation vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftung zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, insbesondere bei einer Temperatur im Bereich von -5 bis 50°C, insbesondere 0 bis 40°C.

Mit dem Vermischen der beiden Komponenten beginnt die Zusammensetzung durch die einsetzende chemische Reaktion auszuhärten, wobei die Aushärtung gegebenenfalls durch die Einwirkung von externer Feuchtigkeit vervollständigt wird.

Bei der Aushärtung reagieren die Reaktivgruppen der Formel (I) mit Isocyanatgruppen, wie vorgängig beschrieben. Weiterhin reagieren die Hydroxylgruppen ebenfalls mit Isocyanatgruppen. Weitere Isocyanatgruppen reagieren unter dem Einfluss von Feuchtigkeit miteinander. Als Ergebnis dieser Reaktionen härtet die Zusammensetzung schliesslich zu einem festen Material aus.

Die Aushärtung erfolgt bevorzugt bei Umgebungstemperatur, insbesondere bei einer Temperatur im Bereich von -5 bis 50°C, insbesondere 0 bis 40°C.

Die Zusammensetzung verfügt über eine vergleichsweise lange Offenzeit und härtet zu einem elastischen Material von hoher Festigkeit und Beständigkeit. Bevorzugt weist die Zusammensetzung eine Offenzeit, gemessen im Normklima und wie in den Beispielen beschrieben, im Bereich von 10 bis 100 min, besonders bevorzugt 15 bis 80 min, insbesondere 15 bis 60 min, auf.

Ein weiterer Gegenstand der Erfindung ist eine ausgehärtete Zusammensetzung, erhalten aus der beschriebenen Zusammensetzung nach dem Vermischen der beiden Komponenten und deren Aushärtung.

Die Zusammensetzung eignet sich für eine Vielzahl von Verwendungen. Sie kann insbesondere verwendet werden als Klebstoff, Dichtstoff, Beschichtung, Giessharz oder Spachtelmasse.

Als Klebstoff oder Dichtstoff ist die Zusammensetzung insbesondere geeignet für Klebe- und Abdichtungsanwendungen in der Bau- und Fertigungsindustrie sowie im Fahrzeugbau, insbesondere für die Parkettverklebung, Anbauteilverklebung, Hohlraumversiegelung, Montage, Modulverklebung, Karosserieverklebung, Scheibenverklebung oder Fugenabdichtung.

Als Beschichtung ist die Zusammensetzung insbesondere geeignet zum Schutz von Tragwerken aus Stahbeton oder Metall, oder von Balkonen, Terrassen, Plätzen, Brücken, Parkdecks, oder zur Abdichtung von Dächern, insbesondere Flachdächern oder schwach geneigten Dachflächen oder Dachgärten, oder im Innern von Gebäuden zur Wasserabdichtung, beispielsweise unter Fliesen oder Keramikplatten in Nasszellen oder Küchen, oder als Bodenbelag in Küchen, Industriehallen oder Fabrikationsräumen, oder als Abdichtung in Auffangwannen, Kanälen, Schächten oder Abwasserbehandlungsanlagen, oder zum Schutz von Oberflächen als Lack oder Versiegelung oder als Schutzbeschichtung für beispielsweise Rohre, oder als Bodenbeschichtung für Sportanlagen wie Turnhallen, Fitnesszentren oder Leichtathletikbahnen.

Als Giessharz ist die Zusammensetzung insbesondere geeignet zur Hohlraumversiegelung, als Nahtabdichtung, als Bindemittel für Composites oder als Elektrovergussmasse.

Als Spachtelmasse ist die Zusammensetzung insbesondere geeignet zur Reparatur oder für Aufbauten an Gebäuden oder Gegenständen.

Für eine Anwendung als Klebstoff oder Dichtstoff weist die Zusammensetzung bei Raumtemperatur bevorzugt eine pastöse Konsistenz mit strukturviskosen Eigenschaften auf. Ein solcher pastöser Dichtstoff oder Klebstoff wird insbesondere aus handelsüblichen manuell, pneumatisch oder elektrisch betriebenen Kartuschen ausgetragen. Möglich ist auch der Austrag aus einem Fass oder Hobbock mittels einer Förderpumpe oder eines Extruders, gegebenenfalls mittels eines Applikationsroboters.

Für eine Anwendung als Beschichtung weist die Zusammensetzung bevorzugt eine bei Raumtemperatur flüssige oder leicht thixotrope Konsistenz auf. Sie wird insbesondere appliziert mittels Rolle, Pinsel oder Spatel oder durch Verteilen mittels einem Roller, Schaber oder einer Zahntraufel, oder sie wird mittels einer Dosieranlage auf den Untergrund gegossen oder gespritzt. Dabei wird in einem Arbeitsgang typischerweise eine Schichtdicke im Bereich von 0.5 bis 3 mm, insbesondere 1.0 bis 2.5 mm, aufgetragen.

Für eine Anwendung als Spachtelmasse weist die Zusammensetzung bevorzugt eine pastöse Konsistenz auf.

Geeignete Substrate, welche mit der Zusammensetzung verklebt oder abgedichtet oder beschichtet werden können, sind insbesondere
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Applikation und Aushärtung der Zusammensetzung wird ein Artikel erhalten, welcher mit der Zusammensetzung verklebt oder abgedichtet oder beschichtet ist. Dieser Artikel kann ein Bauwerk oder ein Teil davon sein, insbesondere ein Bauwerk des Hoch- oder Tiefbaus, eine Brücke, ein Dach, ein Treppenhaus oder eine Fassade, oder er kann ein industrielles Gut oder ein Konsumgut sein, insbesondere ein Fenster, ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

Bevorzugt wird die Zusammensetzung verwendet als Beschichtung, bevorzugt als Beschichtung für Böden, insbesondere in Wohn- und Aufenthaltsräumen wie Büros, sozialen Einrichtungen wie Schulen Kindergärten oder Kliniken, Sportanlagen wie Turnhallen, Fitnesszentren oder Leichtathletikbahnen, Industrie- oder Lagerhallen, auf Balkonen, Terrassen, Plätzen, Brücken oder Parkdecks.

Bevorzugt ist eine solche Beschichtung elastisch und weist eine hohe Härte und einen hohen Weiterreisswiderstand auf.

Bevorzugt weist die Beschichtung dafür eine Bruchdehnung, bestimmt gemäss DIN EN 53504 wie in den Beispielen beschrieben, von mindestens 40%, besonders bevorzugt mindestens 50 %, insbesondere mindestens 60%, auf. Bevorzugt weist die Beschichtung dafür eine Zugfestigkeit, bestimmt gemäss DIN EN 53504 wie in den Beispielen beschrieben, im Bereich von 10 bis 40 MPa auf. Bevorzugt weist die Beschichtung dafür ein Elastizitätsmodul (E-Modul im Bereich von 0.5 bis 5% Dehnung), bestimmt gemäss DIN EN 53504 wie in den Beispielen beschrieben, von mindestens 150 MPa, bevorzugt mindestens 250 MPa, insbesondere mindestens 300 MPa, auf.

Bevorzugt weist die Beschichtung dafür einen Weiterreisswiderstand, bestimmt gemäss DIN ISO 34-1 wie in den Beispielen beschrieben, von mindestens 65 N/mm, insbesondere mindestens 70 N/mm, auf.

Bevorzugt weist die Beschichtung dafür eine Shore D-Härte, bestimmt gemäss DIN 53505 wie in den Beispielen beschrieben, von mindestens 60, besonders bevorzugt mindestens 63, insbesondere mindestens 65, auf.

Weiterhin bevorzugt wird die Zusammensetzung verwendet als Beschichtung für die Abdichtung von Dachflächen.

Bevorzugt verfügt eine solche Beschichtung über gute rissüberbrückende Eigenschaften mit hoher Dehnung und hoher Weiterreissfestigkeit bei moderater Festigkeit.

Bevorzugt weist die Beschichtung dafür eine Bruchdehnung, bestimmt gemäss DIN EN 53504 wie in den Beispielen beschrieben, von mindestens 80 %, besonders bevorzugt mindestens 120 %, insbesondere mindestens 160 %, auf. Bevorzugt weist die Beschichtung dafür eine Zugfestigkeit, bestimmt gemäss DIN EN 53504 wie in den Beispielen beschrieben, im Bereich von 2 bis 20 MPa, insbesondere 4 bis 15 MPa, auf.

Bevorzugt weist die Beschichtung dafür ein Elastizitätsmodul (E-Modul im Bereich von 0.5 bis 5% Dehnung), bestimmt gemäss DIN EN 53504 wie in den Beispielen beschrieben, von höchstens 50 MPa, bevorzugt höchstens 30 MPa, insbesondere höchstens 20 MPa, auf.

Bevorzugt weist die Beschichtung dafür einen Weiterreisswiderstand, bestimmt gemäss DIN ISO 34-1 wie in den Beispielen beschrieben, von mindestens 6 N/mm, insbesondere mindestens 8 N/mm, auf.

Bevorzugt weist die Beschichtung eine Shore A-Härte, bestimmt gemäss DIN 53505 wie in den Beispielen beschrieben, im Bereich von 50 bis 85, besonders bevorzugt 60 bis 80, insbesondere 65 bis 80, auf.

### Beispiele

Im Folgenden sind Ausführungsbeispiele aufgeführt, welche die beschriebene Erfindung näher erläutern sollen. Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich und wurden ohne weitere Vorbehandlung eingesetzt.

### Herstellung von Verbindungen mit Reaktivgruppen der Formel (I):

Die **Aminzahl** wurde bestimmt durch Titration (mit 0.1N HClO₄ in Essigsäure gegen Kristallviolett).

Die **Viskosität** wurde mit einem thermostatisierten Kegel-Platten-Viskosimeter Rheotec RC30 (Fa. Brookfield, Kegeldurchmesser 50 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H-** und **¹³C-NMR-Spektren** wurden bei Raumtemperatur auf einem Spektrometer des Typs Bruker Ascend bei 400.14 MHz (¹H) bzw. 100.63 MHz (¹³C) gemessen; die chemischen Verschiebungen δ sind angegeben in ppm relativ zu Tetramethylsilan (TMS). Kopplungskonstanten J sind angegeben in Hz. Echte und Pseudo-Kopplungsmuster wurden nicht unterschieden.

### Verbindung H-1: N,N'-Bis(ethyl crotonat-3-yl)-α,ω-polyoxypropylendiamin

136.5 g (1.05 mol) Ethylacetoacetat wurden in einem Rundkolben unter Stickstoffatmosphäre vorgelegt. Unter Rühren wurden 153.0 g (0.50 mol) α,ω-Polyoxypropylendiamin mit mittlerem Molekulargewicht Mₙ von 306 g/mol (Mischung aus 84.1 g Jeffamine^{®} D-230 und 68.9 g Jeffamine^{®} D-400, beide von Huntsman) zugegeben, wobei die Temperatur der Reaktionsmischung mittels Kühlen zwischen 15 und 25 °C gehalten wurde. Anschliessend wurde die Reaktionsmischung während 20 min bei Raumtemperatur gerührt und dann die flüchtigen Bestandteile bei 80 °C und 10 mbar Vakuum entfernt. Es wurde eine klare, hellgelbe, schwach riechende Flüssigkeit mit einer Viskosität bei 20°C von 460 mPa·s und einer Aminzahl von 211 mg KOH/g erhalten. Aufgrund der Daten aus ¹H-NMR und ¹³C-NMR liegt die Verbindung **H-1** mehrheitlich als Enaminoester vor.

¹H-NMR (CDCl₃): 8.54 (s, 2 H, NH), 4.40 (s, 2 H, C=CH-C(O)O), 4.07(q, 4 H, O-*CH₂*-CH₃), 3.81-3.14 (m, 15 H, CHz-O und CH-O von Polyether), 1.95 (s, 6 H, N-C(*CH₃*)=CH), 1.24 (t, 6 H, *CH₃*-CH₂-O), 1.24-1.22 (m, 6 H, *CH₃*-CH-N), 1.17-1.06 (m, 9 H, *CH₃*-CH-O von Polyether).

¹³C-NMR (CDCl₃) (nur ausgewertet im Bereich 80 bis 180 ppm): 170.5 (O-C(O) Ester), 161.3 (CH=*C*-NH), 82.3 (*C*H=C-NH).

FT-IR: 2973, 2931, 2871, 1651, 1600, 1498, 1444, 1375, 1362, 1300, 1263, 1133, 1094, 1056, 1026, 976, 963, 783, 697.

### Verbindung H-2: N,N'-Bis(diethyl crotonamid-3-yl)-α,ω-polyoxypropylendiamin

Hergestellt wie für Verbindung **H-1** beschrieben, wobei aber anstelle von Ethylacetoacetat 165.1 g (1.05 mol) N,N-Diethylacetoacetamid eingesetzt wurden. Es wurde eine klare, gelb-orange, schwach riechende Flüssigkeit mit einer Viskosität bei 20°C von 2'500 mPa·s und einer Aminzahl von 198 mg KOH/g erhalten.

FT-IR: 2969, 2929, 2870, 1601, 1578, 1506, 1477, 1443, 1405, 1373, 1358, 1312, 1276, 1253, 1139, 1095, 1081, 1019, 959, 927, 827, 769, 693.

### Verbindung H-3: N,N'-Bis(pent-3-en-2-on-4-yl)-α,ω-polyoxypropylendiamin

Hergestellt wie für Verbindung **H-1** beschrieben, wobei aber anstelle von Ethylacetoacetat 105.1 g (1.05 mol) Acetylaceton eingesetzt wurden. Es wurde eine klare, gelbliche, schwach riechende Flüssigkeit mit einer Viskosität bei 20 °C von 435 mPa·s und einer Aminzahl von 249 mg KOH/g erhalten.

FT-IR: 2970, 2870, 1607, 1570, 1512, 1441, 1353, 1296, 1101, 1009, 960, 930, 795, 735.

### Verbindung H-4: N,N'-Bis(ethyl crotonat-3-yl)-1,3-bis(aminomethyl)benzol

136.5 g (1.05 mol) Ethylacetoacetat und 68.1 g (0.5 mol) 1,3-Bis(aminomethyl)-benzol (von Mitsubishi Gas Chem.) wurden wie für Verbindung **H-1** beschrieben umgesetzt. Es wurde eine klare, gelbe, schwach riechende Flüssigkeit mit einer Viskosität bei 20°C von 4'800 mPa·s und einer Aminzahl von 306 mg KOH/g erhalten, welche nach einer Lagerzeit von mehreren Monaten bei Raumtemperatur zu einem Feststoff kristallisierte.

FT-IR: 3290, 2977, 2931, 2900, 2869, 1646, 1600, 1499, 1438, 1385, 1362, 1289, 1265, 1230, 1169, 1147, 1110, 1057, 1022, 830, 782, 694.

### Verbindung H-5: N-(Ethyl crotonat-3-yl)-2-(2-aminoethoxy)ethan-1-ol

136.5 g (1.05 mol) Ethylacetoacetat und 105.0 g (1.0 mol) 2-(2-Aminoethoxy)-ethan-1-ol wurden wie für Verbindung **H-1** beschrieben umgesetzt. Es wurde eine klare, hellgelbe, schwach riechende Flüssigkeit mit einer Viskosität bei 20 °C von 118 mPa·s und einer Aminzahl von 253 mg KOH/g erhalten.

FT-IR: 3426 (br), 3296, 2976, 2929, 2869, 1646, 1596, 1503, 1443, 1385, 1363, 1257, 1233, 1171, 1123, 1095, 1054, 1019, 979, 922, 887, 783, 699.

### Verbindung H-6: N-(Ethyl crotonat-3-yl)-2-aminoethanol

136.5 g (1.05 mol) Ethylacetoacetat und 62.1 g (1.0 mol) 2-Aminoethanol wurden wie für Verbindung **H-1** beschrieben umgesetzt. Es wurde eine klare, hellgelbe, schwach riechende Flüssigkeit mit einer Viskosität bei 20 °C von 127 mPa·s und einer Aminzahl von 325 mg KOH/g erhalten.

FT-IR: 3398 (br), 3303, 2978, 2933, 2875, 1646, 1634, 1593, 1503, 1441, 1385, 1364, 1269, 1253, 1218, 1169, 1125, 1095, 1051, 1017, 979, 964, 881, 782, 696.

### Verbindung H-7: α,ω-Polyoxypropylen-bis(3-(N-cyclohexylamino) but-2-enoat))

316.1 g (0.79 mol) Polyoxypropylendiol mit mittlerem Molekulargewicht Mₙ von ca. 400 g/mol (Voranol^{®} P 400, von Dow) wurden in einem Rundkolben vorgelegt. Unter Rühren wurden 249.8 g (1.58 mol) tert.Butylacetoacetat und 0.5 g Methansulfonsäure zugegeben. Anschliessend wurden die flüchtigen Bestandteile (tert.-Butanol) bei 80 bis 120°C und 5 mbar Vakuum entfernt. Es wurde das Zwischenprodukt α,ω-Polyoxypropylen-bis(acetoacetat) in Form einer klaren, hellgelben Flüssigkeit mit einer Viskosität bei 20°C von 126 mPa·s erhalten.

85.2 g (0.15 mol) des so hergestellten Zwischenprodukts wurden in einem Rundkolben vorgelegt und unter Rühren 29.8 g (0.30 mol) Cyclohexylamin zugegeben. Anschliessend wurde die Reaktionsmischung während 20 min bei Raumtemperatur gerührt und dann die flüchtigen Bestandteile bei 80°C und 10 mbar Vakuum entfernt. Es wurde eine klare, orangegelbe, schwach riechende Flüssigkeit mit einer Viskosität bei 20°C von 8'400 mPa·s und einer Aminzahl von 140 mg KOH/g erhalten.

FT-IR: 2971, 2929, 2855, 1647, 1604, 1496, 1448, 1374, 1346, 1305, 1271, 1237, 1171, 1149, 1103, 1017, 997, 983, 927, 782, 695.

### Verbindung H-8: N,N'-Bis(ethyl crotonat-3-yl)-2,2(4),4-trimethylhexan-1,6-diamin

136.5 g (1.05 mol) Ethylacetoacetat und 79.2 g (0.5 mol) 2,2(4),4-Trimethylhexan-1,6-diamin (Vestamin^{®} TMD, von Evonik) wurden wie für Verbindung **H-1** beschrieben umgesetzt. Es wurde eine klare, gelb-orange, schwach riechende Flüssigkeit mit einer Viskosität bei 20°C von 874 mPa·s und einer Aminzahl von 290 mg KOH/g erhalten.

### Verbindung H-9:

136.5 g (1.05 mol) Ethylacetoacetat und 162.0 g (1.0 mol Aminogruppen) Polyoxypropylentriamin mit einem mittleren Molekulargewicht Mₙ von etwa 440 g/mol (Jeffamine^{®} T-403, von Huntsman) wurden wie für Verbindung **H-1** beschrieben umgesetzt. Es wurde eine klare, gelbe, schwach riechende Flüssigkeit mit einer Viskosität bei 20°C von 4'870 mPa·s und einer Aminzahl von 199 mg KOH/g erhalten.

### Verbindung H-10: α,ω-Polyoxypropylen-bis(3-(N-2-hydroxyethylamino) but-2-enoat)

85.2 g (0.15 mol) des für die Verbindung **H-7** hergestellten Zwischenprodukts (α,ω-Polyoxypropylen-bis(acetoacetat)) wurden mit 18.3 g (0.30 mol) 2-Aminoethanol wie für die Verbindung **H-7** beschrieben umgesetzt. Es wurde eine klare, orangefarbene, schwach riechende Flüssigkeit mit einer Viskosität bei 20°C von 6'710 mPa·s und einer Aminzahl von 177 mg KOH/g erhalten.

### Verbindung H-11: α,ω-Polyoxypropylen-bis(3-aminobut-2-enoat)

184.20 g (0.32 mol) des für die Verbindung **H-7** hergestellten Zwischenprodukts (α,ω-Polyoxypropylen-bis(acetoacetat)) wurden in einem Rundkolben mit Rückflusskühler und Wasserabscheider vorgelegt, mit 54.72 g (0.90 mol) 28 %-iger wässriger Ammoniaklösung, 200 ml Toluol und 1 ml Ameisensäure versetzt und während 3 Stunden unter Abscheiden von Wasser am Rückfluss gekocht. Dabei wurden insgesamt 39 ml Wasser aufgefangen. Anschliessend wurden die flüchtigen Bestandteile bei 140 °C und Normaldruck, gefolgt von 2 Stunden am Rotationsverdampfer (Badtemperatur 120 °C, 8 mbar Vakuum), entfernt. Es wurden 176.95 g einer klaren, orangefarbenen, schwach riechenden Flüssigkeit mit einer Viskosität bei 20°C von 175 mPa·s erhalten.

Die Verbindungen **H-1** bis **H-6, H-8** und **H-9** sind Verbindungen der Formel (II), wobei die erfindungsgemässen Verbindungen **H-1, H-2, H-3** und **H-9** der Formel (II a) und die nicht-erfindungsgemässen Verbindungen **H-5** und **H-6** der Formel (II b) entsprechen. Die nichterfindungsgemässen

Verbindungen **H-7** und **H-10** sind Verbindungen der Formel (III), wobei die Verbindung **H-10** der Formel (III a) entspricht.

Die Verbindung **H-11** entspricht nicht der Formel (III) und dient als Vergleich für Verbindungen der Formel (III).

### Herstellung von Verbindungen als Vergleich:

### Verbindung R-1 (Dialdimin)

298.7 g (1.05 mol) 2,2-Dimethyl-3-lauroyloxypropanal wurden unter Stickstoffatmosphäre in einem Rundkolben vorgelegt. Dann wurden 153.0 g (0.50 mol) Polyoxypropylendiamin mit mittlerem Molekulargewicht Mₙ von 306 g/mol (Mischung aus 84.1 g Jeffamine^{®} D-230 und 68.9 g Jeffamine^{®} D-400, beide von Huntsman) unter gutem Rühren zugegeben und anschliessend die flüchtigen Bestandteile bei 80 °C und 10 mbar Vakuum entfernt. Es wurde eine klare, hellgelbe, geruchlose Flüssigkeit mit einer Viskosität bei 20°C von 122 mPa·s und einer Aminzahl von 129 mg KOH/g erhalten.

### Verbindung R-2 (Dialdimin)

193.5 g (1.05 mol) Dodecanal (Laurinaldehyd) wurden wir für Verbindung **R-1** beschrieben umgesetzt.

Hergestellt wie für Verbindung **R-1** beschrieben, wobei anstelle von 2,2-Dimethyl-3-lauroyloxypropanal 193.5 g (1.05 mol) Laurinaldehyd eingesetzt wurden. Es wurde eine klare, hellgelbe, schwach riechende Flüssigkeit mit einer Viskosität bei 20°C von 147 mPa·s und einer Aminzahl von 171 mg KOH/g erhalten.

### Verbindung R-3 (Diketimin)

Hergestellt wie für Verbindung **H-1** beschrieben, wobei anstelle von Ethylacetoacetat 103.1 g (1.05 mol) Cyclohexanon eingesetzt wurden. Es wurde eine klare, gelbe, stark riechende Flüssigkeit mit einer Viskosität bei 20°C von 99 mPa·s und einer Aminzahl von 253 mg KOH/g erhalten.

### Herstellung von zweikomponentigen Zusammensetzungen:

### verwendete Substanzen:

| | |
|---|---|
| Setathane^{®} D 1150: | verzweigtes Polyol, Umsetzungsprodukt von Ricinusöl mit Ketonharz, OH-Equivalentgewicht 360 g/Eq (von Allnex) |
| Desmophen^{®} 4011 T: | Polyethertriol mit OH-Equivalentgewicht 102 g/Eq (von Covestro) |
| Voranol^{®} CP 4755 | EO-endcapped Polyoxypropylentriol, OH-Zahl 35 mg KOH/g (von Dow) |
| Lupranol^{®} 4003/1 | EO-endcapped Polyoxypropylentriol mit 45 Gew.-% gepfropftem SAN-Polymer, OH-Zahl 20.0 mg KOH/g (von BASF) |
| Desmodur^{®} VL | Polyisocyanat basierend auf MDI, NCO-Equivalentgewicht 133 g/Eq (von Covestro) |
| Desmodur^{®} CD-L | modifiziertes Polyisocyanat basierend auf MDI, NCO-Equivalentgewicht 142 g/Eq (von Covestro) |
| Zeolith-Paste | Molekularsiebpulver 3Å in Ricinusöl, 1:1 in Gewicht |
| BYK-E 410 | Rheologie-Additiv (von Altana) |

### Zusammensetzungen Z-1 bis Z-31 und Ref-1 bis Ref-14: (Beschichtungen für hohe mechanische Beanspruchung, geeignet als Bodenbeschichtung)

Für jede Zusammensetzung wurden die in Tabelle 1 oder 2 angegebenen Inhaltsstoffe in den angegebenen Mengen (in Gewichtsteilen) der ersten Komponente ("Komponente-1") mittels eines Zentrifugalmischers (SpeedMixer^{™} DAC 150, FlackTek Inc.) bei 1600 rpm während 3 min unter Feuchtigkeitsausschluss zu einer homogenen Flüssigkeit verarbeitet und mindestens 2 h aufbewahrt. Anschliessend wurde die in Tabelle 1 angegebene Menge der zweiten Komponente zur ersten Komponente gegeben und die beiden Komponenten mittels des Zentrifugalmischers unter Feuchtigkeitsausschluss bei 1600 rpm während 3 min zu einer homogenen Flüssigkeit verarbeitet und diese unverzüglich folgendermassen geprüft:
Die **Offenzeit** wurde bestimmt, indem 20 Gramm der vermischten Zusammensetzung mittels eines Spatels in regelmässigen Zeitabständen bewegt wurden. War die Zusammensetzung für eine sinnvolle Verarbeitung gefühlsmässig erstmals zu stark angedickt, wurde die Offenzeit ab Beginn des Mischprozesses abgelesen.

Zur Bestimmung der mechanischen Eigenschaften wurde die Zusammensetzung auf eine PTFE-beschichteten Folie zu einem Film von 2 mm Dicke ausgegossen, dieser durch Lagerung während 14 Tagen im Normklima ausgehärtet, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf maximale **Zugfestigkeit, Bruchdehnung** und **E-Modul** (zwischen 0.5-5% Dehnung) geprüft. Weiter wurden einige Prüfkörper zur Bestimmung des **Weiterreisswiderstandes** ausgestanzt und gemäss DIN ISO 34-1, Verfahren B (winkelförmiger Prüfkörper) bei einer Zuggeschwindigkeit von 500 mm/min geprüft.

Für die Bestimmung der **Shore-Härte** nach DIN 53505 wurden aus dem noch flüssigen Reaktionsgemisch zylindrische Prüfkörper (Durchmesser 20 mm, Dicke 5 mm) hergestellt und vor der Messung 14 d im Normklima gelagert. Bei den Resultaten ist jeweils angegeben, ob es sich um Shore A oder Shore D Werte handelt.

Der **Aspekt** wurde visuell beurteilt an den Filmen, welche für die Bestimmung der mechanischen Eigenschaften im Normklima hergestellt worden waren. Als "schön" wird ein blasenfreier Film mit einer homogenen, nicht-klebrigen Oberfläche bezeichnet. Als "uneben" wird ein Film bezeichnet, welcher aufgrund der kurzen Offenzeit nicht ebenmässig verlaufen ist.

Der **Geruch** wurde durch Riechen mit der Nase im Abstand von 2 cm an den frisch hergestellten Filmen beurteilt. "nein" bedeutet, dass kein Geruch wahrnehmbar war. "ja" bedeutet, dass ein muffiger Geruch wahrnehmbar war. "stark" bedeutet, dass ein intensiver, lösemittelartiger Geruch wahrnehmbar war.

Die Resultate sind in Tabelle 1 oder 2 angegeben.

Die mit "Ref" bezeichneten Zusammensetzungen sind Vergleichsbeispiele.

Die Zusammensetzungen Z-1 - Z-12, Z-27, Z-31, Z-32 und Z-34 - Z-37 sind erfindungsgemässe Zusammensetzungen, Z-13 - Z-26, Z-28 - Z-30, Z-33 und Z-38 - Z-41 sind nicht-erfindungsgemässe Zusammensetzungen.

**Tabelle 1: Zusammensetzung (in Gewichtsteilen) und Eigenschaften von Z-1 bis Z-26 und Ref-1 bis Ref-12.**

| **Zusammensetzung** | | **Ref-1** | **Z-1** | **Z-2** | **Z-3** | **Z-4** | **Z-5** | **Z-6** | **Ref-2** |
|---|---|---|---|---|---|---|---|---|---|
| **Komponente-1:** | | | | | | | | | |
| | Setathane^{®} D 1150 | 90.8 | 89.8 | 88.5 | 86.2 | 81.7 | 68.1 | 45.4 | - |
| | Desmophen^{®} 4011 T | 4.0 | 4.0 | 3.9 | 3.8 | 3.6 | 3.0 | 2.0 | - |
| | Verbindung | - | **H-1** | **H-1** | **H-1** | **H-1** | **H-1** | **H-1** | **H-1** |
| | | | 1.0 | 2.5 | 5.0 | 10.0 | 25.0 | 50.0 | 100.00 |
| | Zeolith-Paste | 5.0 | 5.0 | 4.9 | 4.8 | 4.5 | 3.8 | 2.5 | - |
| | BYK-E 410 | 0.2 | 0.2 | 0.2 | 0.2 | 0.2 | 0.2 | 0.1 | - |

| **Komponente-2:** | | | | | | | | | |
|---|---|---|---|---|---|---|---|---|---|
| | Desmodur^{®} VL | 41.0 | 41.0 | 41.0 | 42.0 | 43.0 | 44.0 | 47.0 | 52.0 |
| Offenzeit [min] | | 40 | 32 | 29 | 26 | 24 | 20 | 10 | 5 |
| Zugfestigkeit [MPa] | | 20.3 | 19.2 | 19.2 | 19.6 | 21.4 | 25.5 | 32.1 | n.b. |
| Bruchdehnung [%] | | 92 | 101 | 101 | 93 | 97 | 62 | 43 | n.b. |
| E-Modul [MPa] | | 226 | 233 | 227 | 300 | 372 | 499 | 657 | n.b. |
| Weiterreisswiderstand [N/mm] | | 65.0 | 64.2 | 65.8 | 72.2 | 79.7 | 95.0 | 105.6 | n.b. |
| Shore D | | 59 | 66 | 65 | 69 | 71 | 69 | 73 | 71 |
| Aspekt | | schön | schön | schön | schön | schön | schön | schön | uneben |
| Geruch | | nein | nein | nein | nein | nein | nein | nein | nein |

| **Zusammensetzung** | | | | **Z-7** | **Z-8** | **Z-9** | **Z-10** | **Z-11** | **Z-12** |
|---|---|---|---|---|---|---|---|---|---|
| **Komponente-1:** | | | | | | | | | |
| | Setathane^{®} D 1150 | | | 88.5 | 86.2 | 81.7 | 88.5 | 86.2 | 81.7 |
| | Desmophen^{®} 4011 T | | | 3.9 | 3.8 | 3.6 | 3.9 | 3.8 | 3.6 |
| | Verbindung | | | **H-2** | **H-2** | **H-2** | **H-3** | **H-3** | **H-3** |
| | | | | 2.5 | 5.0 | 10.0 | 2.5 | 5.0 | 10.0 |
| | Zeolith-Paste | | | 4.9 | 4.8 | 4.5 | 4.9 | 4.8 | 4.5 |
| | BYK 410 | | | 0.2 | 0.2 | 0.2 | 0.2 | 0.2 | 0.2 |

| **Komponente-2:** | | | | | | | | | |
|---|---|---|---|---|---|---|---|---|---|
| Desmodur^{®} VL | | | | 41.0 | 41.0 | 42.0 | 41.0 | 42.0 | 43.0 |
| Offenzeit [min] | | | | 40 | 30 | 20 | 35 | 25 | 20 |
| Zugfestigkeit [MPa] | | | | 15.6 | 18.9 | 18.8 | 19.4 | 15.2 | 23.5 |
| Bruchdehnung [%] | | | | 79 | 97 | 77 | 89 | 57 | 49 |
| E-Modul [MPa] | | | | 193 | 233 | 346 | 228 | 264 | 451 |
| Weiterreisswiderstand [N/mm] | | | | 67 | 69 | 81 | 69 | 73 | 92 |
| Shore D | | | | 65 | 65 | 70 | 64 | 69 | 70 |
| Aspekt | | | | schön | schön | schön | schön | schön | schön |
| Geruch | | | | nein | nein | nein | nein | nein | nein |

| **Zusammensetzung** | | **Z-13** | **Z-14** | **Z-15** | **Z-16** | **Z-17** | **Z-18** | **Z-19** | **Z-20** |
|---|---|---|---|---|---|---|---|---|---|
| **Komponente-1:** | | | | | | | | | |
| | Setathane^{®} D 1150 | 88.5 | 86.2 | 81.7 | 88.5 | 86.2 | 81.7 | 88.5 | 86.2 |
| | Desmophen^{®} 4011 T | 3.9 | 3.8 | 3.6 | 3.9 | 3.8 | 3.6 | 3.9 | 3.8 |
| | Verbindung | **H-4** | **H-4** | **H-4** | **H-5** | **H-5** | **H-5** | **H-6** | **H-6** |
| | | 2.5 | 5.0 | 10.0 | 2.5 | 5.0 | 10.0 | 2.5 | 5.0 |
| | Zeolith-Paste | 4.9 | 4.8 | 4.5 | 4.9 | 4.8 | 4.5 | 4.9 | 4.8 |
| | BYK 410 | 0.2 | 0.2 | 0.2 | 0.2 | 0.2 | 0.2 | 0.2 | 0.2 |

| **Komponente-2:** | | | | | | | | | |
|---|---|---|---|---|---|---|---|---|---|
| | Desmodur^{®} VL | 42.0 | 43.0 | 45.0 | 43.0 | 45.0 | 49.0 | 44.0 | 47.0 |
| Offenzeit [min] | | 35 | 30 | 25 | 40 | 35 | 30 | 40 | 35 |
| Zugfestigkeit [MPa] | | 17.7 | 19.4 | 29.8 | 21.5 | 24.4 | 33.4 | 21.6 | 29.0 |
| Bruchdehnung [%] | | 75 | 66 | 38 | 95 | 85 | 72 | 89 | 72 |
| E-Modul [MPa] | | 257 | 357 | 601 | 367 | 486 | 674 | 420 | 538 |
| Weiterreisswiderstand [N/mm] | | 72 | 74 | 89 | 76 | 83 | n.b. | 80 | 88 |
| Shore D | | 65 | 70 | 73 | 61 | 68 | 72 | 68 | 73 |
| Aspekt | | schön | schön | schön | schön | schön | schön | schön | schön |
| Geruch | | nein | nein | nein | nein | nein | nein | nein | nein |

| **Zusammensetzung** | | | | **Z-21** | **Z-22** | **Z-23** | **Z-24** | **Z-25** | **Z-26** |
|---|---|---|---|---|---|---|---|---|---|
| **Komponente-1:** | | | | | | | | | |
| | Setathane^{®} D 1150 | | | 89.8 | 88.5 | 86.2 | 81.6 | 86.2 | 81.7 |
| | Desmophen^{®} 4011 T | | | 4.0 | 3.9 | 3.8 | 3.6 | 3.8 | 3.6 |
| | Verbindung | | | **H-7** | **H-7** | **H-7** | **H-7** | **H-10** | **H-10** |
| | | | | 1.0 | 2.5 | 5.0 | 10.0 | 5.0 | 10.0 |
| | Zeolith-Paste | | | 4.9 | 4.8 | 4.7 | 4.5 | 4.8 | 4.5 |
| | BYK 410 | | | 0.2 | 0.2 | 0.2 | 0.2 | 0.2 | 0.2 |

| **Komponente-2:** | | | | | | | | | |
|---|---|---|---|---|---|---|---|---|---|
| | Desmodur^{®} VL | | | 41.0 | 41.0 | 41.0 | 41.0 | 43.0 | 45.0 |
| Offenzeit [min] | | | | 40 | 35 | 28 | 24 | 28 | 23 |
| Zugfestigkeit [MPa] | | | | 20.8 | 20.4 | 20.6 | 21.0 | 22.9 | 21.1 |
| Bruchdehnung [%] | | | | 93 | 92 | 94 | 92 | 101 | 74 |
| E-Modul [MPa] | | | | 319 | 307 | 322 | 385 | 282 | 348 |
| Weiterreisswiderstand [N/mm] | | | | 73 | 69 | 73 | 75 | 71 | 75 |
| Shore D | | | | 67 | 66 | 70 | 69 | 70 | 72 |
| Aspekt | | | | schön | schön | schön | schön | schön | schön |
| Geruch | | | | nein | nein | nein | nein | nein | nein |

| **Zusammensetzung** | | | | | **Ref-3** | **Ref-4** | **Ref-5** | **Ref-6** | **Ref-7** |
|---|---|---|---|---|---|---|---|---|---|
| **Komponente-1:** | | | | | | | | | |
| | Setathane^{®} D 1150 | | | | 88.4 | 86.2 | 88.5 | 86.2 | 81.7 |
| | Desmophen^{®} 4011 T | | | | 3.9 | 3.8 | 3.9 | 3.8 | 3.6 |
| | Verbindung | | | | **Et 300**¹ | **Et 300**¹ | **R-1** | **R-1** | **R-1** |
| | | | | | 2.5 | 5.0 | 2.5 | 5.0 | 10.0 |
| | Zeolith-Paste | | | | 4.9 | 4.8 | 4.9 | 4.8 | 4.5 |
| | BYK 410 | | | | 0.2 | 0.2 | 0.2 | 0.2 | 0.2 |

| **Komponente-2:** | | | | | | | | | |
|---|---|---|---|---|---|---|---|---|---|
| | Desmodur^{®} VL | | | | 43.0 | 45.0 | 41.0 | 41.0 | 40.0 |
| | Offenzeit [min] | | | | 10 | <4 | 40 | 45 | 50 |
| | Zugfestigkeit [MPa] | | | | n.b. | n.b. | 21.3 | 17.5 | 13.2 |
| | Bruchdehnung [%] | | | | n.b. | n.b. | 101 | 88 | 91 |
| | E-Modul [MPa] | | | | n.b. | n.b. | 190 | 135 | 55 |
| | Weiterreisswiderstand [N/mm] | | | | n.b. | n.b. | 60 | 50 | 31 |
| | Shore D | | | | 58 | 50 | 57 | 54 | 43 |
| | Aspekt | | | | uneben | uneben | schön | schön | schön |
| | Geruch | | | | ja | ja | nein | nein | nein |

| **Zusammensetzung** | | | | | **Ref-8** | **Ref-9** | **Ref-10** | **Ref-11** | **Ref-12** |
|---|---|---|---|---|---|---|---|---|---|
| **Komponente-1:** | | | | | | | | | |
| | Setathane^{®} D 1150 | | | | 88.5 | 86.2 | 81.7 | 88.5 | 86.2 |
| | Desmophen^{®} 4011 T | | | | 3.9 | 3.8 | 3.6 | 3.9 | 3.8 |
| | Verbindung | | | | **R-2** | **R-2** | **R-2** | **R-3** | **R-3** |
| | | | | | 2.5 | 5.0 | 10.0 | 2.5 | 5.0 |
| | Zeolith-Paste | | | | 4.9 | 4.8 | 4.5 | 4.9 | 4.8 |
| | BYK 410 | | | | 0.2 | 0.2 | 0.2 | 0.2 | 0.2 |

| **Komponente-2:** | | | | | | | | | |
|---|---|---|---|---|---|---|---|---|---|
| Desmodur^{®} VL | | | | | 41.0 | 41.0 | 41.0 | 41.0 | 42.0 |
| | Offenzeit [min] | | | | 20 | 20 | 15 | 15 | 10 |
| | Zugfestigkeit [MPa] | | | | 18.5 | 17.6 | 14.8 | 15.3 | 14.5 |
| | Bruchdehnung [%] | | | | 85 | 85 | 85 | 70 | 59 |
| | E-Modul [MPa] | | | | 176 | 136 | 87 | 172 | 222 |
| | Weiterreisswiderstand [N/mm] | | | | 57 | 51 | 41 | 59 | 72 |
| | Shore D | | | | 60 | 59 | 57 | 60 | 67 |
| | Aspekt | | | | schön | schön | schön | schön | schön |
| | Geruch | | | | nein | nein | nein | stark | stark |

| | | | | | | | | | |
|---|---|---|---|---|---|---|---|---|---|
| "n.b." steht für,, nicht bestimmt" (zu schnelle Reaktion) ¹ Ethacure^{®} 300 (3,5-Dimethylthio-2,4(6)-toluylendiamin, von Albemarle) | | | | | | | | | |

Aus der Tabelle 1 ist ersichtlich, dass die Verbindungen **H-1** bis **H-7** im Vergleich zur Referenz-Zusammensetzung **Ref-1** schon bei kleiner Einsatzmenge eine deutliche Erhöhung des Elastizitätsmoduls und des Weiterreisswiderstandes bewirkten, bei ähnlicher oder höherer Zugfestigkeit.

Besonders gute Eigenschaften wurden mit den Verbindungen **H-1, H-5** und **H-6,** erzielt, welche den Formeln (II a) und (II b) entsprechen. Die Zusammensetzungen **Z-3** und **Z-4** mit Verbindung **H-1** (Formel II a) ermöglichten bei unverändert hoher Zugfestigkeit und Bruchdehnung eine deutliche Erhöhung des Elastizitätsmoduls und der Weiterreissfestigkeit, ebenso wie die Zusammensetzungen **Z-16, Z-17** und **Z-19** mit Verbindung **H-5** oder **H-6** (Formel II b), wobei diese zusätzlich über eine ähnlich lange Offenzeit wie die Referenz-Zusammensetzung **Ref-1** verfügten.

Die Verbindung **H-4,** welche nicht den Formeln (II a) oder (II b) entspricht, bewirkte eine reduzierte Bruchdehnung **(Z-13** bis **Z-15).**

**Tabelle 2: Zusammensetzung (in Gewichtsteilen) und Eigenschaften von Z-27 bis Z-31 und Ref-13 bis Ref-14**

| **Zusammensetzung** | | **Ref-13** | **Z-27** | **Z-28** | **Z-29** | **Z-30** | **Ref-14** | **Z-31** |
|---|---|---|---|---|---|---|---|---|
| **Komponente-1:** | | | | | | | | |
| | Setathane^{®} D 1150 | 91.0 | 82.4 | 87.5 | 86.2 | 81.5 | - | - |
| | Desmophen^{®} 4011 T | 4.0 | 2.6 | 2.5 | 3.8 | 3.5 | 4.0 | 4.0 |
| | Voranol^{®} CP 4755 | - | - | - | - | - | 82.0 | 73.4 |
| | 1,4-Butandiol | - | - | - | - | - | 9.0 | 7.6 |
| | Verbindung | - | **H-1** | **H-8** | **H-11** | **H-11** | - | **H-1** |
| | | | 10.0 | 5.0 | 5.0 | 10.0 | | 10.0 |
| | Zeolith-Paste | 5.0 | 5.0 | 5.0 | 5.0 | 5.0 | 5.0 | 5.0 |

| **Komponente-2:** | | | | | | | | |
|---|---|---|---|---|---|---|---|---|
| | Desmodur^{®} VL | 41.0 | 41.0 | 41.0 | 41.0 | 41.0 | 41.0 | 41.0 |
| Offenzeit [min] | | 53 | 37 | 22 | 28 | 51 | 93 | 48 |
| Zugfestigkeit [MPa] | | 21.3 | 22.8 | 19.0 | 19.3 | 18.4 | 3.2 | 4.6 |
| Bruchdehnung [%] | | 118 | 113 | 105 | 115 | 119 | 92 | 129 |
| E-Modul [MPa] | | 182 | 276 | 162 | 119 | 85 | 3.6 | 5.4 |
| Weiterreisswiderstand [N/mm] | | 62.6 | 83.2 | 53.7 | 42.8 | 39.8 | 5.1 | 7.5 |
| Shore | | 98A | 99A | 68D | 60D | 61D | 54A | 63A |
| Aspekt | | schön | schön | schön | schön | schön | schön | schön |
| Geruch | | nein | nein | nein | nein | nein | nein | nein |

Aus der Tabelle 2 ist ersichtlich, dass mit dem Ricinusöl-basierten Polyol Setathane^{®} D 1150 besonders hohe Festigkeiten bei hoher Bruchdehnung erreicht werden **(Ref-13** und **Z-27** bis **Z-30),** während ein System mit einer Kombination aus Polyether-Triol und Butandiol bei ähnlicher Dehnbarkeit massiv weniger Festigkeit zeigte **(Ref-14** und **Z-31).** Bei beiden Systemen wird mit der Verbindung **H-1** jeweils eine deutliche Erhöhung des Elastizitätsmoduls und des Weiterreisswiderstand erreicht **(Z-27** im Vergleich zu **Ref-13** und **Z-31** im Vergleich zu **Ref-14**).

Die Zusammensetzung **Z-28** mit der Verbindung **H-8,** welche nicht den Formeln (II a) oder (II b) entspricht, zeigte eine kurze Offenzeit und keine Erhöhung des Elastizitätsmoduls oder Weiterreisswiderstands.

Mit der Verbindung **H-11,** welche besonders aufwändig ist in der Herstellung und nicht der Formel (III) entspricht, konnten ebenfalls weder das Elastizitätsmodul noch der Weiterreisswiderstand erhöht werden **(Z-29** und **Z-30** im Vergleich zu **Ref-13).**

### Zusammensetzungen Z-32 bis Z-41 und Ref-15 bis Ref-16: (Beschichtungen mit hoher Rissüberbrückung, geeignet als Dachabdichtung)

Für jede Zusammensetzung wurden die in Tabelle 3 angegebenen Inhaltsstoffe der ersten Komponente hergestellt und mit der in Tabelle 3 angegebenen Menge der zweiten Komponente vermischt, wie für Zusammensetzung **Z-1** beschrieben. Die vermischte Zusammensetzung wurde jeweils wie für Zusammensetzung **Z-1** beschrieben geprüft.

Die Resultate sind in Tabelle 3 angegeben.

Die mit "Ref" bezeichneten Zusammensetzungen sind Vergleichsbeispiele.

**Tabelle 3: Zusammensetzung (in Gewichtsteilen) und Eigenschaften von Z-32 bis Z-41 und Ref-15 bis Ref-16**

| **Zusammensetzung** | | **Ref-15** | **Z-32** | **Z-33** | **Ref-16** | **Z-34** | **Z-35** |
|---|---|---|---|---|---|---|---|
| **Komp.-1:** | | | | | | | |
| | Voranol^{®} CP 4755 | 74.5 | 66.0 | 65.3 | 58.0 | 53.8 | 49.5 |
| | Lupranol^{®} 4003/1 | - | - | - | 30.0 | 30.0 | 30.0 |
| | Kreide | 13.5 | 13.5 | 13.5 | - | - | - |
| | 1,4-Butandiol | 7.0 | 5.5 | 6.2 | 7.0 | 6.2 | 5.5 |
| | Verbindung | - | **H-1** | **H-7** | - | **H-1** | **H-** |
| | | | 10.0 | 10.0 | | 5.0 | 10.0 |
| | Zeolith-Paste | 5.0 | 5.0 | 5.0 | 5.0 | 5.0 | 5.0 |

| **Komp.-2:** | | | | | | | |
|---|---|---|---|---|---|---|---|
| | Desmodur^{®} CD-L | 30.0 | 30.0 | 30.0 | 30.0 | 30.0 | 30.0 |
| Offenzeit [min] | | 79 | 60 | 43 | 54 | 48 | 44 |
| Zugfestigkeit [MPa] | | 1.4 | 8.5 | 1.8 | 2.1 | 4.5 | 13.6 |
| Bruchdehnung [%] | | 40 | 207 | 152 | 55 | 222 | 257 |
| E-Modul [MPa] | | 9.2 | 15.3 | 5.0 | 12.5 | 7.3 | 13.6 |
| Weiterreisswiderstand [N/mm] | | 4.9 | 14.8 | 8.1 | 8.2 | 10.2 | 14.3 |
| Shore A | | 59 | 81 | 58 | 76 | 70 | 77 |
| Aspekt | | schön | schön | schön | schön | schön | schön |
| Geruch | | nein | nein | nein | nein | nein | nein |

**Tabelle 3: (Fortsetzung)**

| **Zusammensetzung** | | **Z-36** | **Z-37** | **Z-38** | **Z-39** | **Z-40** | **Z-41** |
|---|---|---|---|---|---|---|---|
| **Komp.-1:** | | | | | | | |
| | Voranol^{®} CP 4755 | 55.9 | 49.6 | 56.2 | 54.3 | 53.6 | 49.2 |
| | Lupranol^{®} 4003/1 | 30.0 | 30.0 | 30.0 | 30.0 | 30.0 | 30.0 |
| | Kreide | - | - | - | - | - | - |
| | 1,4-Butandiol | 6.6 | 5.4 | 6.3 | 5.7 | 6.4 | 5.8 |
| | Verbindung | **H-9** | **H-9** | **H-10** | **H-10** | **H-11** | **H-11** |
| | | 2.5 | 10.0 | 2.5 | 5.0 | 5.0 | 10.0 |
| | Zeolith-Paste | 5.0 | 5.0 | 5.0 | 5.0 | 5.0 | 5.0 |

| **Komp.-2:** | | | | | | | |
|---|---|---|---|---|---|---|---|
| | Desmodur^{®} CD-L | 30.0 | 30.0 | 30.0 | 30.0 | 30.0 | 30.0 |
| Offenzeit [min] | | 48 | 35 | 45 | 36 | 93 | 90 |
| Zugfestigkeit [MPa] | | 4.0 | 11.0 | 6.6 | 8.4 | 4.8 | 7.4 |
| Bruchdehnung [%] | | 148 | 209 | 187 | 174 | 196 | 273 |
| E-Modul [MPa] | | 9.8 | 11.1 | 9.1 | 10.1 | 10.7 | 11.0 |
| Weiterreisswiderstand [N/mm] | | 9.7 | 12.4 | 9.8 | 10.6 | 11.4 | 12.9 |
| Shore A | | 73 | 78 | 76 | 78 | 74 | 74 |
| Aspekt | | schön | schön | schön | schön | schön | schön |
| Geruch | | nein | nein | nein | nein | nein | nein |

Aus der Tabelle 3 ist ersichtlich, dass das System mit dem SAN-Polymer enthaltenden Polyol Lupranol^{®} 4003/1 höhere Zugfestigkeiten bei hohem Weiterreisswiderstand ermöglicht im Vergleich zu einem System mit einem konventionellen Polyol und entsprechender Menge Kreide anstelle des SAN-Polymers, wobei bei beiden Systemen mittels der Verbindung **H-1** die mechanischen Eigenschaften deutlich verbessert werden, insbesondere in Bezug auf Dehnung, Zugfestigkeit und Weiterreisswiderstand (**Z-34** und **Z-35** im Vergleich zu **Ref-16** und **Z-32** im Vergleich zu **Ref-15**). Auch die weiteren Verbindungen **H-7, H-9, H-10** und **H-11** zeigen einen positiven Effekt auf die mechanischen Eigenschaften, wobei die Verbindung **H-11,** welche besonders aufwändig ist in der Herstellung und nicht der Formel (III) entspricht, eine unerwünscht lange Offenzeit bewirkt (**Z-40** und **Z-41** im Vergleich zu **Ref-16**). Für eine gute Verarbeitbarkeit ist eine Offenzeit im Bereich von etwa 30 bis 60 Minuten besonders vorteilhaft.

Die Verbindung **H-10,** welche der Formel (III a) entspricht, zeigt bereits bei sehr geringer Einsatzmenge eine besonders hohe Festigkeit (**Z-38**).

## Patentansprüche

1. Zusammensetzung umfassend eine erste Komponente enthaltend
- mindestens ein Polyol und
- 1 bis 50 Gewichts-% mindestens eine Verbindung der Formel (II a) bezogen auf die Summe der mit Isocyanatgruppen reaktiven Bestandteile der ersten Komponente, 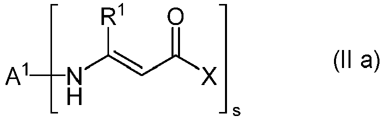 wobei R¹ für einen Alkyl-Rest mit 1 bis 8 C-Atomen oder einen PhenylRest und wobei s für 2 und A¹ für α,ω-Poiyoxypropyien mit einem mittleren Molekulargewicht Mₙ im Bereich von 170 bis 500 g/mol, oder s für 3 und A¹ für einen von Trimethylolpropan oder Glycerin gestarteten dreiwertigen Polyoxypropylen-Rest mit einem mittleren Molekulargewicht Mₙ im Bereich von 300 bis 500 g/mol stehen, und X für einen Alkyl- oder Alkoxy-Rest mit 1 bis 8 C-Atomen, oder für einen Rest der Formel - NR²R³ steht, wobei R² und R³ unabhängig voneinander jeweils für H oder für einen gegebenenfalls Ether-Sauerstoff aufweisenden Alkyl-, Cycloalkyl-, Aralkyl- oder Aryl-Rest mit 1 bis 12 C-Atomen, oder zusammen für einen gegebenenfalls Ether-Sauerstoff aufweisenden Alkylen-Rest mit 3 bis 6 C-Atomen stehen, wobei das mittlere Molekulargewicht Mₙ mittels Gelpermeationschromatographie (GPC) gegen Polystyrol als Standard bestimmt wird,
und eine zweite Komponente enthaltend mindestens ein aromatisches Polyisocyanat und/oder mindestens ein aromatische Isocyanatgruppen-haltiges Polymer.

2. Zusammensetzung gemäss Anspruch 1, **dadurch gekennzeichnet, dass** das Polyol ein mittleres Molekulargewicht Mₙ im Bereich von 500 bis 10'000 g/mol und eine mittlere OH-Funktionalität im Bereich von 1.8 bis 3 aufweist.

3. Zusammensetzung gemäss einem der Ansprüche 1 bis 2, **dadurch gekennzeichnet, dass** sie mindestens ein Fettsäure-basiertes Polyol mit einem mittleren Molekulargewicht Mₙ im Bereich von 500 bis 2'000 g/mol enthält insbesondere in Form eines Umsetzungsprodukts mit einem Ketonharz.

4. Zusammensetzung gemäss einem der Ansprüche 1 bis 3, **dadurch gekennzeichnet, dass** sie mindestens ein Polyethertriol mit einem mittleren Molekulargewicht Mₙ im Bereich von 3'000 bis 6'000 g/mol, insbesondere mit darin dispergierten oder aufgepfropften Styrol-Acrylnitril-Partikeln, enthält.

5. Zusammensetzung gemäss einem der Ansprüche 1 bis 4, **dadurch gekennzeichnet, dass** sie als aromatisches Polyisocyanat 4,4'-Diphenylmethandiisocyanat enthält, wobei gegebenenfalls Anteile von 2,4'- oder 2,2'-Diphenylmethandiisocyanat oder Derivate von 4,4'-Diphenylmethandiisocyanat oder Homologe von 4,4'-Diphenylmethandiisocyanat enthalten sind.

6. Zusammensetzung gemäss einem der Ansprüche 1 bis 5, **dadurch gekennzeichnet, dass** sie zusätzlich mindestens einen weiteren Bestandteil ausgewählt aus Füllstoffen, Haftvermittlern, Trocknungsmitteln, Katalysatoren und Stabilisatoren enthält.

7. Ausgehärtete Zusammensetzung, erhalten aus der Zusammensetzung gemäss einem der Ansprüche 1 bis 6 nach dem Vermischen der beiden Komponenten und deren Aushärtung.

8. Verwendung der Zusammensetzung gemäss einem der Ansprüche 1 bis 7 als Beschichtung, insbesondere für Böden oder Dachflächen.

## Claims

1. Composition comprising a first component containing
- at least one polyol and
- 1% to 50% by weight of at least one compound of the formula (II a), based on the sum total of the constituents of the first component that are reactive with isocyanate groups, 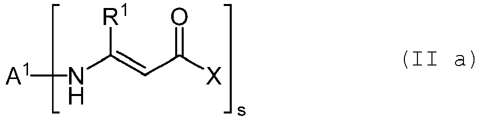 where R¹ is an alkyl radical having 1 to 8 carbon atoms or a phenyl radical and where s is 2 and A¹ is α,ω-polyoxypropylene having an average molecular weight Mₙ in the range from 170 to 500 g/mol, or s is 3 and A¹ is a trivalent polyoxypropylene radical started from trimethylolpropane or glycerol and having an average molecular weight Mₙ in the range from 300 to 500 g/mol, and X is an alkyl or alkoxy radical having 1 to 8 carbon atoms, or a radical of the formula -NR²R³ where R² and R³ are each independently H or an alkyl, cycloalkyl, aralkyl or aryl radical optionally having ether oxygen and having 1 to 12 carbon atoms, or together are an alkylene radical optionally having ether oxygen and having 3 to 6 carbon atoms, where the average molecular weight Mₙ is determined by means of gel permeation chromatography (GPC) against polystyrene as standard,
and a second component containing at least one aromatic polyisocyanate and/or at least one polymer containing aromatic isocyanate groups.

2. Composition according to Claim 1, **characterized in that** the polyol has an average molecular weight Mₙ in the range from 500 to 10'000 g/mol and an average OH functionality in the range from 1.8 to 3.

3. Composition according to either of Claims 1 and 2, **characterized in that** it comprises at least one fatty acid-based polyol having an average molecular weight Mₙ in the range from 500 to 2'000 g/mol, especially in the form of a reaction product with a ketone resin.

4. Composition according to any of Claims 1 to 3, **characterized in that** it comprises at least one polyether triol having an average molecular weight Mₙ in the range from 3'000 to 6'000 g/mol, especially with styrene-acrylonitrile particles dispersed therein or grafted thereon.

5. Composition according to any of Claims 1 to 4, **characterized in that** it comprises diphenylmethane 4,4'-diisocyanate as aromatic polyisocyanate, optionally including fractions of diphenylmethane 2,4'- or 2,2'-diisocyanate or derivatives of diphenylmethane 4,4'-diisocyanate or homologues of diphenylmethane 4,4'-diisocyanate.

6. Composition according to any of Claims 1 to 5, **characterized in that** it additionally comprises at least one further constituent selected from fillers, adhesion promoters, desiccants, catalysts and stabilizers.

7. Cured composition obtained from the composition according to any of Claims 1 to 6 after the two components have been mixed and cured.

8. Use of the composition according to any of Claims 1 to 7 as coating, especially for floors or roof areas.

## Revendications

1. Composition comprenant un premier composant contenant
- au moins un polyol et
- 1 à 50 % en poids d'au moins un composé de formule (IIa) par rapport à la somme des constituants du premier composant réactifs avec des groupes isocyanate, 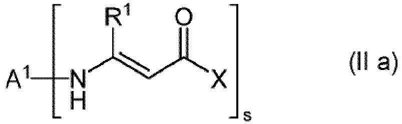 dans laquelle R¹ représente un radical alkyle ayant de 1 à 8 atomes de carbone ou un radical phényle et dans laquelle s représente 2 et A¹ représente un radical α,ω-polyoxypropylène ayant une masse moléculaire moyenne Mₙ dans la plage de 170 à 500 g/mole, ou s représente 3 et A¹ représente un radical polyoxypropylène trivalent amorcé avec du triméthylolpropane ou du glycérol, ayant une masse moléculaire moyenne dans la plage de 300 à 500 g/mole, et X représente un radical alkyle ou alcoxy ayant de 1 à 8 atomes de carbone, ou représente un radical de formule -NR²R³, R² et R³ représentant chacun indépendamment l'un de l'autre un atome d'hydrogène ou un radical alkyle, cycloalkyle, aralkyle ou aryle ayant de 1 à 12 atomes de carbone, comportant éventuellement de l'oxygène en fonction éther, ou représentant ensemble un radical alkylène ayant de 3 à 6 atomes de carbone, comportant éventuellement de l'oxygène en fonction éther, la masse moléculaire moyenne Mₙ étant déterminée par chromatographie par perméation de gel (GPC) contre du polystyrène en tant qu'étalon,
et un deuxième composant contenant au moins un polyisocyanate aromatique et/ou au moins un polymère contenant des groupes isocyanate aromatiques.

2. Composition selon la revendication 1, **caractérisée en ce que** le polyol présente une masse moléculaire moyenne Mₙ dans la plage de 500 à 10 000 g/mole et une fonctionnalité OH moyenne dans la plage de 1,8 à 3.

3. Composition selon l'une quelconque des revendications 1 et 2, **caractérisée en ce qu'**elle contient au moins un polyol à base d'acide gras, ayant une masse moléculaire moyenne Mₙ dans la plage de 500 à 2 000 g/mole, en particulier sous forme d'un produit de réaction avec une résine cétonique.

4. Composition selon l'une quelconque des revendications 1 à 3, **caractérisée en ce qu'**elle contient au moins un polyéthertriol ayant une masse moléculaire moyenne Mₙ dans la plage de 3 000 à 6 000 g/mole, en particulier comportant des particules de styrène-acrylonitrile dispersées dans ou greffées sur ce dernier.

5. Composition selon l'une quelconque des revendications 1 à 4, **caractérisée en ce qu'**elle contient en tant que polyisocyanate aromatique du 4,4'-diisocyanate de diphénylméthane, des proportions de 2,4'- ou 2,2'-diisocyanate de diphénylméthane ou de dérivés de 4,4'-diisocyanate de diphénylméthane ou d'homologues de 4,4'-diisocyanate de diphénylméthane étant éventuellement contenues.

6. Composition selon l'une quelconque des revendications 1 à 5, **caractérisée en ce qu'**elle contient en outre au moins un autre constituant choisi parmi les charges, promoteurs d'adhérence, desséchants, catalyseurs et stabilisants.

7. Composition durcie, obtenue à partir de la composition selon l'une quelconque des revendications 1 à 6 après le mélange des deux composants et leur durcissement.

8. Utilisation de la composition selon l'une quelconque des revendications 1 à 7 en tant que revêtement, en particulier pour sols et surfaces de toitures.
